# EUROPÄISCHE PATENTSCHRIFT

(11) **EP 3 924 274 B1**
(45) Veröffentlichungstag und Bekanntmachung des Hinweises auf die Patenterteilung: **19.07.2023**
(21) Anmeldenummer: 20711772.2
(22) Anmeldetag: 10.02.2020
(51) Int. Cl.: B65G 1/04, B65G 1/137

(54) **LAGER- UND KOMMISSIONIERSYSTEM MIT VERBESSERTER EINLAGERLEISTUNG UND VERFAHREN ZUM BETRIEB DESSELBEN**
STORAGE AND PICKING SYSTEM WITH IMPROVED STORAGE PERFORMANCE AND METHOD OF OPERATING THE SAME
SYSTÈME DE STOCKAGE ET DE PRÉLÈVEMENT AVEC DES PERFORMANCES DE STOCKAGE AMÉLIORÉES ET SON MODE DE FONCTIONNEMENT

(30) Priorität: 11.02.2019 AT 501022019; 19.02.2019 AT 501242019
(43) Veröffentlichungstag der Anmeldung: 22.12.2021
(73) Patentinhaber: TGW Logistics Group GmbH, 4614 Marchtrenk (AT)
(72) Erfinder: KETTLGRUBER, Gerald, 4030 Linz (AT); LINDLEY, Timothy, 58239 Schwerte (DE); KOLMHOFER, Philipp Johann, 4060 Leonding (AT); BARBERÁ MATEO, Marta, 08940 Cornellá de Llobregat (ES); SCHRÖPF, Harald Johannes, 4600 Wels (AT)
(74) Vertreter: Burger, Hannes
(86) Internationale Anmeldenummer: PCT/AT2020/060038
(87) Internationale Veröffentlichungsnummer: WO 2020/163885

(56) Entgegenhaltungen:
- DE-A1-102014 203 298
- DE-U1- 20 103 664

## Beschreibung

Die Erfindung betrifft ein Verfahren zum Betrieb eines Lager- und Kommissioniersystems, bei dem vorwiegend oder ausschließlich gemischte Ware an einem Wareneingang des Lager- und Kommissioniersystems bereitgestellt und in Folge eingelagert wird. Weiterhin betrifft die Erfindung ein Lager- und Kommissioniersystem, mit einem Wareneingang für die Bereitstellung vorwiegend oder ausschließlich gemischter Ware, einem dem Wareneingang fördertechnisch nachgelagerten Warenlager und einer dem Warenlager fördertechnisch nachgelagerten Kommissionierstation, welche über eine Auslager-Fördertechnik fördertechnisch mit dem Warenlager verbunden ist. Darüber hinaus umfasst das Lager- und Kommissioniersystem eine erste Beladestation, welche für die artikelreine Beladung von Hängetaschen mit der bereitgestellten Ware ausgebildet ist, und eine der ersten Beladestation fördertechnisch nachgelagerte Hängetaschen-Sortiereinrichtung für die Hängetaschen, welche über eine Hängetaschen-Fördertechnik fördertechnisch mit der ersten Beladestation verbunden ist.

Die DE 10 2014 203 298 A1 offenbart dazu auch eine Hängefördereinrichtung zum Transport von Fördergut in Hängetaschen mit einer Führungsschienenanordnung und einer Beladestation für die Hängetaschen. Eine Hängetasche umfasst dabei eine erste Taschenseitenwand und eine zweite Taschenseitenwand, die zum Öffnen und Schließen eines Fördergutaufnahmebereiches durch Schwenken der ersten Taschenseitenwand um eine Taschenschwenkachse auseinander- und zusammenklappbar sind.

Die DE 201 03 664 U1 offenbart ein Lager- und Kommissioniersystem mit einer Hängefördereinrichtung zum Transport von Fördergut in Hängetaschen sowie einer Beladestation für die Hängetaschen gemäß dem Oberbegriff des Anspruchs 1 und des Anspruchs 15.

Die bekannten Systeme sind im Besonderen für die Anlieferung von Neuware ausgelegt. Charakteristisch für eine solche Warenlieferung ist, dass sie eine vergleichsweise hohe Stückzahl je Warentype umfasst. Durch das Konsumverhalten, insbesondere im E-Commerce, fallen jedoch auch erhebliche Mengen an Retourwaren an. Charakteristisch für eine solche Rücksendung ist, dass sie eine vergleichsweise kleine Stückzahl je Warentype umfasst, häufig nur ein Stück einer Warentype. Die Rücklagerung solcher Retourware in das Warenlager des Lager- und Kommissioniersystems ist mit speziellen Problemen verbunden, welche durch bekannte Lager- und Kommissioniersysteme nur unzureichend gelöst sind. Häufig kommt es daher zu Verzögerungen im Prozessablauf im Bereich zwischen dem Wareneingang und dem Warenlager.

Eine Aufgabe der Erfindung ist es daher, ein verbessertes Lager- und Kommissioniersystem sowie ein verbessertes Verfahren zum Betrieb desselben anzugeben. Insbesondere soll die Rücklagerung von Retourware effizienter gestaltet werden.

Die Aufgabe der Erfindung wird durch ein Verfahren zum Betrieb eines Lager- und Kommissioniersystems gelöst, umfassend die Schritte
a) Bereitstellen (vorwiegend) gemischter Ware an einem Wareneingang des Lager- und Kommissioniersystems,
b) artikelreines Beladen von Hängetaschen mit der bereitgestellten Ware an einer ersten Beladestation und Erfassen einer Warentype der in die Hängetasche geladenen Ware,
c) Transport der beladenen Hängetaschen in eine Hängetaschen-Sortiereinrichtung mit Hilfe einer Hängetaschen-Fördertechnik,
d) Bilden von Gruppen von Hängetaschen in der Hängetaschen-Sortiereinrichtung basierend auf einer Waren-Gruppier-Vorschrift, welche einer Gruppe jeweils eine oder mehrere vorgebbare Warentypen zuweist,
e) Transport der Gruppen von Hängetaschen zu einer zweiten Beladestation mit Hilfe der Hängetaschen-Fördertechnik,
f) Umladen der in den Hängetaschen artikelrein enthaltenen Ware einer Gruppe von den Hängetaschen in ein Warenlager-Ladehilfsmittel an der zweiten Beladestation und Einlagern des Warenlager-Ladehilfsmittels in ein Warenlager des Lager- und Kommissioniersystems mit Hilfe einer Einlager-Fördertechnik, wobei das Umladen und Einlagern ohne Bezug zu einem Kommissionierauftrag erfolgt und wobei das Warenlager-Ladehilfsmittel unterschiedlich zu einer Hängetasche ausgebildet ist,
g) Erfassen von Kommissionieraufträgen zum Kommissionieren von Auftragswaren,
h) Bearbeitung eines Kommissionierauftrags umfassend die Schritte
   - Auslagern eines Warenlager-Ladehilfsmittels, welches zumindest eine dem Kommissionierauftrag zugeordnete Auftragsware enthält, aus dem Warenlager mit Hilfe einer Auslager-Fördertechnik und
   - Beladen eines Ziel-Ladehilfsmittels mit der zumindest einen Auftragsware an einer Kommissionierstation.

Die Aufgabe der Erfindung wird auch durch ein Lager- und Kommissioniersystem, gelöst, umfassend
- einen Wareneingang für die Bereitstellung gemischter Ware,
- ein dem Wareneingang fördertechnisch nachgelagertes Warenlager,
- eine dem Warenlager fördertechnisch nachgelagerte Kommissionierstation, welche über eine Auslager-Fördertechnik fördertechnisch mit dem Warenlager verbunden ist,
- eine erste Beladestation, welche für die artikelreine Beladung von Hängetaschen mit der bereitgestellten Ware ausgebildet ist,
- eine der ersten Beladestation fördertechnisch nachgelagerte Hängetaschen-Sortiereinrichtung für die Hängetaschen, welche über eine Hängetaschen-Fördertechnik fördertechnisch mit der ersten Beladestation verbunden ist,
- eine zweite Beladestation, welche der Hängetaschen-Sortiereinrichtung fördertechnisch nachgelagert und dem Warenlager fördertechnisch vorgelagert ist, welche über die Hängetaschen-Fördertechnik fördertechnisch mit der Hängetaschen-Sortiereinrichtung verbunden ist, welche über eine Einlager-Fördertechnik fördertechnisch mit dem Warenlager verbunden ist und welche für das Umladen der in den Hängetaschen artikelrein enthaltenen Ware von den Hängetaschen in ein Warenlager-Ladehilfsmittel ausgebildet ist, wobei das Warenlager-Ladehilfsmittel unterschiedlich zu einer Hängetasche ausgebildet ist,
- ein Steuersystem, welches dazu eingerichtet ist,
   i) eine Warentype einer in eine Hängetasche geladenen Ware zu erfassen und
   ii) die Hängetaschen-Sortiereinrichtung zur Bildung von Gruppen von Hängetaschen basierend auf einer Waren-Gruppier-Vorschrift, welche einer Gruppe jeweils eine oder mehrere vorgebbare Warentypen zuweist, anzusteuern und
   iii) die Hängetaschen-Fördertechnik für einen Transport der Gruppen von Hängetaschen zu einer zweiten Beladestation anzusteuern und
   iv) das Umladen der in den Hängetaschen enthaltenen Ware von den Hängetaschen einer Gruppe von Hängetaschen in das Warenlager-Ladehilfsmittel und das Einlagern der Warenlager-Ladehilfsmittel in das Warenlager mit Hilfe der Einlager-Fördertechnik ohne Bezug zu einem Kommissionierauftrag auszulösen und
   v) Kommissionieraufträge zum Kommissionieren von Auftragswaren zu erfassen und
   vi) einen Kommissionierauftrag zu bearbeiten, indem das Steuersystem auch dazu eingerichtet ist,
- das Auslagern eines Warenlager-Ladehilfsmittels, welches zumindest eine dem Kommissionierauftrag zugeordnete Auftragsware enthält, aus dem Warenlager mit Hilfe der Auslager-Fördertechnik auszulösen und
- das Beladen eines Ziel-Ladehilfsmittels mit der zumindest einen Auftragsware an einer Kommissionierstation anzusteuern.

Das angegebene Verfahren umfasst die Bildung von Gruppen von Waren gleicher Warentype(n) in der Hängetaschen-Sortiereinrichtung. Aufgrund der Bauweise benötigt eine solche Hängetaschen-Sortiereinrichtung bezogen auf das Aufnahmevermögen beziehungsweise bezogen auf die Sortierleistung nur relativ wenig Bauraum. Dieser Vorteil tritt dann besonders hervor, wenn die Hängetaschen jeweils nur mit einer geringen Anzahl an Waren oder überhaupt nur mit einer Ware beladen sind. Durch die Bildung von Gruppen kann aber auch das Einlagern von Waren mittels Warenlager-Ladehilfsmittel effizient erfolgen, da pro Bereitstellung eines Warenlager-Ladehilfsmittels, welche das zeitaufwändige Aus- und Einlagern des Warenlager-Ladehilfsmittels aus und in das Warenlager bedingt, relativ viele Waren in das Warenlager-Ladehilfsmittel umgeladen werden. Ein Warenlager-Ladehilfsmittel ist dann besonders effizient, wenn eine größere Anzahl an Waren pro Warenlager-Ladehilfsmittel gelagert wird. Durch die vorgeschlagenen Maßnahmen werden also die Vorteile der Hängetaschen-Technik mit jene der Warenlager-Ladehilfsmittel kombiniert, wodurch insbesondere die Rücklagerung von Retourwaren, oder allgemein von Waren, die in geringer Stückzahl pro Warentype vorliegen, effizient erfolgen kann.

In einem "Lager- und Kommissioniersystem" können Waren zum Beispiel an einem Wareneingang angeliefert und übernommen werden und sodann gegebenenfalls umgepackt und in einem "Warenlager" eingelagert werden. Das Warenlager kann zu diesem Zweck Lagerregale mit jeweils mehreren Lagerplätzen aufweisen. Die Waren können auch gemäß einem Auftrag kommissioniert werden, das heißt aus dem Lager ausgelagert, zu einem Auftrag zusammengestellt und am Warenausgang zum Abtransport bereitgestellt werden. Die Waren werden zwischen Wareneingang und Warenausgang nicht substantiell verändert, ganz im Gegensatz zu einem Herstellungsprozess. Eine geringe Formänderung ist aber möglich, insbesondere bei nicht starren Körpern wie zum Beispiel Beuteln oder Säcken oder aber auch bei anderen nachgiebigen Verpackungen, etwa aus Karton oder Kunststoff. Ein Lager- und Kommissioniersystem kann auch eine oder mehrere Sortiereinrichtungen aufweisen, mit der Waren in eine vorgegebene oder vorgebbare Reihenfolge gebracht werden können.

"Waren" sind allgemein Objekte des Warenhandels und werden am Wareneingang angeliefert und am Warenausgang gemäß einem Auftrag zu einem Kunden abtransportiert. Waren, die einem Auftrag zugeordnet sind, werden im Rahmen der Erfindung als "Auftragswaren" bezeichnet. Die Zuordnung zu einem Auftrag kann für bereits gelagerte Waren erfolgen oder im Prinzip auch schon davor. Unter einer "Ware" oder einer "Auftragsware" wird im Rahmen der Erfindung insbesondere ein einzeln handhabbares Objekt beziehungsweise eine einzeln handhabbare Gruppe von Objekten verstanden. Generell ist anzumerken, dass eine "Ware" und eine "Auftragsware" ein und dasselbe Objekt zu verschiedenen Zeitpunkten sein kann. Die Waren können ausschließlich Liegeware oder Liegeware und Hängeware umfassen.

Eine "Warentype" gibt die Art einer Ware an. Beispielsweise kann in der Textilbranche als Warentype "Hemd, weiß, Größe Small", "Hemd, schwarz, Größe Large", "T-Shirt, rot, Größe XL", "Hose, Größe 34/34" oder "Socken, schwarz, Größe 43" und dergleichen vorgesehen sein. Mit anderen Worten spricht man von verschiedenen Warentypen, wenn sich die jeweilige Ware (Hemd, Hose, T-Shirt, usw.) beispielsweise in der Konfektionsgröße und/oder Farbe, etc. unterscheidet. Im allgemeinen Handel (general merchandise) können als Warentype beispielsweise unterschiedliche Haushaltswaren mit jeweils verschiedenen Produktmerkmalen und dergleichen oder unterschiedliche Kosmetika mit jeweils verschiedenen Verpackungsgrößen und dergleichen vorgesehen sein.

Zumindest ein "Auftrag zum Kommissionieren von Waren" (kurz "Kommissionierauftrag") umfasst im Rahmen der Erfindung die von einem Kunden gewünschte Warentype und Stückzahl einer oder mehrerer Waren. Die Waren werden (hauptsächlich oder ausschließlich) im Warenlager gelagert.

Unter "Kommissionieren" ist im Rahmen der Erfindung das Zusammenstellen von Waren für einen Kommissionierauftrag zu verstehen, im engeren Sinn das Beladen eines Ziel-Ladehilfsmittels mit der Ware des Kommissionierauftrags.

"Artikelrein" bedeutet im Zusammenhang mit einem Warenlager-Ladehilfsmittel, dass die in einem Ladehilfsmittel gelagerten Waren dieselbe Warentype aufweisen. Beispielsweise enthält ein erstes Ladehilfsmittel die Ware "A" und ein zweites Ladehilfsmittel die Ware "B" usw. Andererseits können die Ladehilfsmittel durch Trennwände in mehrere Aufnahmefächer unterteilt werden und unterschiedliche Warentypen aufnehmen, wobei im ersten Aufnahmefach eine Ware "A" und im zweiten Aufnahmefach eine Ware "B" aufgenommen werden kann.

"Artikelrein" bedeutet im Zusammenhang mit einer Hängetasche, dass die in einer Hängetasche gelagerten Waren dieselbe Warentype aufweisen, sofern mehr als eine Ware in der Hängetasche transportiert wird. Hängetaschen, die mit nur einer (einzigen) Ware beladen ist, sind ohnehin artikelrein beladen.

"Gemischte" oder "nicht artikelreine" Waren weisen dagegen unterschiedliche Warentypen auf. Spricht man von einem Bereitstellen gemischter Ware (Liegeware oder Liegeware und Hängeware), so versteht man das Bereitstellen von Waren unterschiedlicher Warentypen.

"Gemischte" oder "nicht artikelreine" Waren bedeutet im Zusammenhang mit einem Warenlager-Ladehilfsmittel, dass in dem Ladehilfsmittel oder einem Aufnahmefach des Ladehilfsmittels Waren verschiedener Warentypen gelagert sind.

Unter einem "Wareneingang" ist jener Bereich zu verstehen, in dem dem Lager- und Kommissioniersystem Waren zugeführt werden. Allgemein kann der Wareneingang auch als "Warenübernahmebereich" bezeichnet werden. Im Speziellen können angelieferte Warenträger (z.B. Paletten, Kartons, etc.) manuell oder automatisiert vereinzelt werden. Man spricht bei diesem Vorgang auch von "Depalettieren".

Unter einem "Warenausgang" ist jener Bereich zu verstehen, in dem Auftragswaren aus dem Lager- und Kommissioniersystem abgeführt werden. Allgemein kann der Warenausgang auch als "Warenübergabebereich" bezeichnet werden.

Ein "Anliefer-Ladehilfsmittel" ist ein Ladehilfsmittel, das dem Transport der Waren zum Lager- und Kommissioniersystem dient. Dieses kann insbesondere als Karton, Palette, Hängetasche oder Regal ausgebildet sein.

Ein "Warenlager-Ladehilfsmittel" dient generell der Lagerung und dem Transport von Waren im Lager- und Kommissioniersystem und kann insbesondere als Behälter, Karton, Tablar, Palette oder Regal ausgebildet sein. Die Ladehilfsmittel können mehrere Aufnahmebereiche / Aufnahmefächer aufweisen.

Die Lagerung der Waren im Warenlager kann auch direkt mit einem Anliefer-Ladehilfsmittel erfolgen, das dann die Rolle des Warenlager-Ladehilfsmittels annimmt.

Ein "Ziel-Ladehilfsmittel" dient der Aufnahme der Waren beim Kommissioniervorgang und kann ebenfalls als Behälter, Karton, Palette, Beutel (insbesondere als "Polybag"), Tasche, Sack, Hängetasche oder Regal ausgebildet sein. Das Ziel-Ladehilfsmittel kann insbesondere als "Versandladehilfsmittel" fungieren und dem Abtransport von Waren aus dem Lager- und Kommissioniersystem dienen. Das Ziel-Ladehilfsmittel kann aber auch als "Zwischenladehilfsmittel" fungieren, in dem kommissionierte und für den Versand bestimmte Waren zwischengelagert werden, bevor sie in ein Versandladehilfsmittel umgeladen werden.

Eine "Hängetasche" umfasst insbesondere eine Vorderwand, eine Rückwand, einen durch die Vorderwand und die Rückwand begrenzten Aufbewahrungsraum und eine an der Hängetasche an einer ersten Seite ausgebildete und durch die Vorderwand und die Rückwand begrenzte Beladeöffnung und/oder Endladeöffnung. Die Vorderwand kann mit einer Bodenplatte versehen sein. Die Hängetasche kann an einer zweiten Seite auch einen Seitenwandanschlag aufweisen, gegen welchen die Ware anlegbar ist. Insbesondere können die Vorderwand und die Rückwand einstückig ausgebildet sein, beispielsweise durch eine Stoff- oder Gewebebahn, die an ihrem oberen Ende an einer Hängebahn / Hängestange gelagert ist und an ihrem unteren Ende eine Schlaufe bildet. In einer Schließstellung weisen die Vorderwand und die Rückwand nur geringen Abstand zueinander auf, wodurch die Beladeöffnung und Endladeöffnung eine kleine Fläche und der Aufbewahrungsraum der Hängetasche ein kleines Volumen aufweist. Im Falle einer Stoff- oder Gewebebahn weisen ihre oberen Enden ebenfalls nur geringen Abstand zueinander auf, und die durch die Stoff- oder Gewebebahn gebildete Schlaufe ist eng. Die Ware kann in der Schließstellung somit auf engem Raum gelagert und transportiert werden. In einer Offenstellung weisen die Vorderwand und die Rückwand dagegen großen Abstand zueinander auf, wodurch die Beladeöffnung und Endladeöffnung eine große Fläche und der Aufbewahrungsraum der Hängetasche ein großes Volumen aufweist. Im Falle einer Stoff- oder Gewebebahn weisen ihre oberen Enden ebenfalls großen Abstand zueinander auf, und die durch die Stoff- oder Gewebebahn gebildete Schlaufe ist weit. In der Offenstellung kann die Hängetasche somit gut be- und entladen werden. Eine solche Hängetasche ist zum Beispiel in dem deutschen Gebrauchsmuster DE 20 2017 106 993 U1, DE 20 2017 100 206 U1 oder den österreichischen Patentanmeldungen A 50320/2018 und A 50059/2019 offenbart. In einer besonderen Ausführungsform kann die Hängetasche auch eine Bodenklappe aufweisen, die beim Entladevorgang geöffnet wird. Insbesondere kann die Bodenklappe automatisch durch eine Entladevorrichtung geöffnet werden.

Eine mögliche Ausführung eines Transportträgers zum hängenden Transport einer Hängetasche ist beispielweise in der österreichischen Patentanmeldung A 50092/2019 beschrieben.

An dieser Stelle wird auch angemerkt, dass nicht alle Hängetaschen dieselben Eigenschaften aufweisen müssen, sondern Hängetaschen auch unterschiedlich ausgebildet sein können. Hängetaschen können zudem mehrere Aufbewahrungsbereiche / Aufbewahrungsfächer aufweisen.

Eine "Fördertechnik" dient allgemein zum Transport von Ladehilfsmitteln und/oder Waren. Die Fördertechnik kann in unterschiedliche, funktionale Bereiche gegliedert werden, beispielsweise eine "Einlagerfördertechnik", die zum Transport von Waren in ein Warenlager dient, und eine "Auslagerfördertechnik", die zum Transport von Waren aus dem Warenlager dient, sowie eine "Hängetaschen-Fördertechnik", die zum Transport von Hängetaschen dient. Die einzelnen Bereiche der Fördertechnik können darüber hinaus in mehrere Abschnitte unterteilt werden. Beispielsweise kann die Einlagerfördertechnik, die Auslagerfördertechnik und/oder die "Hängetaschen-Fördertechnik" jeweils in mehrere Abschnitte untergliedert sein. Die Fördertechnik kann weiterhin technologisch in "ortsfeste Fördertechnik" und "automatisiert betriebene Förderfahrzeuge" unterteilt werden. Das heißt, die Hängetaschen-Fördertechnik und/oder die Hängetaschen-Sortiereinrichtung und/oder die Einlager-Fördertechnik und/oder die Auslager-Fördertechnik des Lager- und Kommissioniersystems kann ortsfeste Fördertechnik und/oder autonome Flurförderfahrzeuge umfassen.

"Ortsfeste Fördertechnik" benötigt zum Warentransport fix verbaute Einrichtungen. Unter ortsfester Fördertechnik sind insbesondere Rollenförderer, Bandförderer, Gurtförderer, Kettenförderer und dergleichen zu verstehen. Ortsfeste Fördertechnik kann insbesondere auch eine "Hängebahn" aufweisen, an der Hängetaschen hängend gelagert und/oder transportiert werden können.

Unter "automatisiert betriebenen (autonomen) Förderfahrzeugen" sind selbstfahrende beziehungsweise fahrerlose Förderfahrzeuge zum Warentransport zu verstehen, welche entlang fix vorgegebener Bahnen fahren oder welche frei geführt sind, also ohne fixer Spurführung. Eine fixe Spurführung kann am Boden der Fahrfläche vorgegeben sein, etwa mit Hilfe von optischen Farbstreifen, mit magnetischen Streifen, mit Markierungs-Tags oder auch mit Schienen. Ein automatisiert betriebenes Förderfahrzeug weist insbesondere eine Transportplattform auf, auf der die zu transportierenden Waren temporär aufgenommen werden. Anstelle der Transportplattform oder zusätzlich dazu kann das automatisiert betriebene Förderfahrzeug auch eine (teleskopierbare) Hängestange beziehungsweise Hängebahn zur Aufnahme von Hängetaschen aufweisen. Beispielsweise kann die Transportplattform/Hängestange fix am Förderfahrzeug befestigt sein, die Transportplattform/Hängestange kann aber auch vertikal und/oder seitlich relativ zu einem Fahrgestell des Förderfahrzeugs beweglich sein, um beispielsweise Waren in ein Lagerregal einlagern und aus dem Lagerregal auslagern zu können. Am Fahrgestell sind Räder angeordnet, von denen wenigstens eines angetrieben ist. Weiterhin umfasst ein automatisiert betriebenes Förderfahrzeug auch eine elektronische Steuerung zum Empfang von Befehlen von einer übergeordneten (zentralen) Steuerung und zum Steuern/Regeln der Bewegungen des automatisiert betriebenen Förderfahrzeugs.

Ein "Regalbediengerät" ist ein automatisiert betriebenes Förderfahrzeug, das auf Schienen fährt und als Einebenen-Regalbediengerät (auch "Shuttle" genannt) oder als Mehrebenen-Regalbediengerät ausgeführt sein kann. Regalbediengeräte benötigen für ihren Betrieb Elemente ortsfester Fördertechnik (nämlich die Schienen). Aus diesem Grund werden Regalbediengeräte der ortsfesten Fördertechnik zugerechnet.

Ein "autonomes Flurförderfahrzeug" ist ein schienenungebundenes, automatisiert betriebenes (fahrerloses) Förderfahrzeug. Wenigstens eines der Räder ist lenkbar, sofern das autonome Förderfahrzeug nicht über Räder verfügt, mit denen auch eine Seitwärtsbewegung ausgeführt werden kann (z.B. Mecanum-Räder). Ein autonomes Flurförderfahrzeug umfasst auch Sensoren zum Erfassen der Umgebung des Flurförderfahrzeugs und zur Orientierung im Raum. Solche autonomen Flurförderfahrzeuge sind dem Fachmann unter "Autonomous Guided Vehicles", kurz "AGV" bekannt.

Eine "Hängetaschen-Fördertechnik" umfasst mehrere "Hängebahnen". An der Hängetaschen-Fördertechnik" werden Hängetaschen hängend gelagert und/oder transportiert.

Eine "Sortier-Hängebahn" ist demnach eine Hängebahn in der Hängetaschen-Sortiereinrichtung. Eine "Transport-Hängebahn" ist eine Hängebahn, über die Hängetaschen hängend transportiert werden können. Eine "mobile Lager-Hängebahn" ist eine bewegliche Hängebahn, die nicht einem bestimmten Ort fixiert ist. Eine mobile Lager-Hängebahn kann insbesondere ähnlich wie ein mobiles Regal aufgebaut sein und ebenfalls Räder zum leichteren Transport aufweisen.

Eine "Hängetaschen-Sortiereinrichtung" ist eine Einrichtung, mit der Hängetaschen beziehungsweise die darin gelagerte Ware in eine vorgegebene oder vorgebbare Reihenfolge gebracht werden können. Im Speziellen werden in der Hängetaschen-Sortiereinrichtung "Hängetaschen-Gruppen" gebildet. In der Hängetaschen-Sortiereinrichtung können Hängetaschen auch kurzzeitig gelagert werden. Demnach kann die Hängetaschen-Sortiereinrichtung auch als Hängetaschen-Puffereinrichtung verstanden werden, welche bevorzugt eine Sortierung und Pufferung der Hängetaschen durchführen kann. Eine Sortier-Hängebahn entspricht dann demnach einer Puffer-Hängebahn.

Eine "Hängetaschen-Gruppe" umfasst eine Vielzahl an Hängetaschen, die auf einer Hängebahn (unmittelbar) aufeinander folgen und in denen Waren gelagert sind die eine "Waren-Gruppier-Vorschrift" erfüllen.

Eine "Waren-Gruppier-Vorschrift" weist einer Hängetaschen-Gruppe jeweils eine oder mehrere vorgebbare Warentypen zu. Eine Waren-Gruppier-Vorschrift kann vom Betreiber des Lager- und Kommissioniersystems an einem Steuersystem des Lager- und Kommissioniersystems erfasst und von diesem verarbeitet werden. Die Waren-Gruppier-Vorschrift kann auch als Beladeauftrag für die Warenlager-Ladehilfsmittel verstanden werden.

Eine "Kommissionierstation" ist eine Station beziehungsweise ein Bereich oder Platz, an der oder dem Auftragswaren in ein Ziel-Ladehilfsmittel geladen werden können. Für die Steuerung des Kommissioniervorgangs der Auftragswaren kann die Kommissionierstation eine Kommissionierstations-Steuerung aufweisen. Denkbar wäre aber auch, dass der Kommissioniervorgang alternativ oder zusätzlich von einer zentralen Steuerung des Lager- und Kommissioniersystems angesteuert wird.

An der "ersten Beladestation" werden angelieferte Waren in eine Hängetasche geladen, entweder manuell durch eine Person oder automatisch durch eine Beladevorrichtung, insbesondere durch einen Roboter. An der ersten Beladestation wird zudem eine Warentype der in die Hängetasche geladenen Ware erfasst. An der ersten Beladestation wird demnach die Warentype datentechnisch mit der zugehörigen Hängetasche verknüpft. Jeder Hängetasche kann hierzu ein Identifikationsmittel, insbesondere ein RFID-Transponder (radio frequency identification) zugeordnet sein. Das Identifikationsmittel kann an der Hängetasche angeordnet werden oder an dem Transportträger, sofern die Hängetasche durch einen Transportträger hängend transportiert wird.

Darüber hinaus kann die Information gespeichert werden, welche Warentype in welche Hängetasche geladen wurde.

An der "zweiten Beladestation" werden die in den Hängetaschen enthaltenen Waren in ein Warenlager-Ladehilfsmittel umgeladen, wiederum entweder manuell durch eine Person oder automatisch durch eine Beladevorrichtung, insbesondere durch einen Roboter. Die Beladevorrichtung an der zweiten Beladestation kann auch durch eine Entladestation zum automatischen Entladen einer Hängetasche gebildet werden, wie sie beispielsweise in der österreichischen Patentanmeldung A 50320/2018 beschrieben ist. Das Entladen der Hängetasche kann dabei entweder direkt in das Warenlager-Ladehilfsmittel erfolgen oder über eine Fördervorrichtung (Rutsche), welche die zu entladende Hängetasche und das zu befüllende Warenlager-Ladehilfsmittel fördertechnisch verbindet.

Eine "Andienposition" ist generell eine Position, an der eine Ware, eine Hängetasche oder ein Ladehilfsmittel angedient beziehungsweise bereitgestellt wird. An dieser Position ist ein Be- und/oder Entladen der betreffenden Hängetasche oder des betreffenden Ladehilfsmittels möglich. Beispielsweise kann die Andienposition durch eine Halteposition für ein Warenlager-Ladehilfsmittel oder einer Hängetasche auf einer Fördertechnik gebildet sein.

Ein "Steuersystem" dient allgemein der Ansteuerung der Elemente des Lager- und Kommissioniersystems, insbesondere der Fördertechnik des Lager- und Kommissioniersystems. Das Steuersystem kann durch eine einzige Steuerung gebildet sein oder mehrere Steuerungen umfassen, die miteinander verbunden sind und zusammenwirken. Gegebenenfalls können die Steuerungen auch hierarchisch gegliedert sind. Beispielsweise kann das Steuerungssystem einen Auftragsrechner umfassen, welcher der Erfassung eines Auftrags und zur Vorbereitung desselben dient. Insbesondere umfasst das Steuerungssystem auch die Steuerungen der ersten und zweiten Beladestation sowie der Kommissionierstation.

Weitere vorteilhafte Ausgestaltungen und Weiterbildungen der Erfindung ergeben sich nun aus den Unteransprüchen sowie aus der Beschreibung in Zusammenschau mit den Figuren.

Vorteilhaft ist es auch, wenn das vorgestellte Verfahren zusätzlich die folgenden Schritte umfasst:
a') Bereitstellen gemischter Ware am Wareneingang des Lager- und Kommissioniersystems, wobei die Ware auch gemischte Hängeware umfasst,
b') artikelreines Beladen von Hängetaschen und/oder von Hängewaren-Transportträgern mit der bereitgestellten Hängeware an der ersten Beladestation und Erfassen einer Warentype der in/auf die Hängetasche und/oder auf den Hängewaren-Transportträgern geladenen Hängeware,
c') Transport der beladenen Hängetaschen und/oder der beladenen Hängewaren-Transportträger in die Hängetaschen-Sortiereinrichtung mit Hilfe der Hängetaschen-Fördertechnik,
d') Bilden von Gruppen von Hängetaschen und/oder Hängewaren-Transportträgern in der Hängetaschen-Sortiereinrichtung basierend auf der Waren-Gruppier-Vorschrift, welche einer Gruppe jeweils eine oder mehrere vorgebbare Warentypen zuweist,
e') Transport der Gruppen von Hängetaschen und/oder der Gruppen von Hängewaren-Transportträgern zur zweiten Beladestation mit Hilfe der Hängetaschen-Fördertechnik,
f) Umladen der in/auf die Hängetasche und/oder auf den Hängewaren-Transportträgern geladenen Hängeware einer Gruppe von Hängetaschen und/oder Hängewaren-Transportträgern in/auf ein Warenlager-Hängewaren-Ladehilfsmittel, das von den Warenlager-Ladehilfsmitteln umfasst ist, an der zweiten Beladestation und Einlagern des Warenlager-Hängewaren-Ladehilfsmittels in das Hängewaren-Warenlager, das vom Warenlager des Lager- und Kommissioniersystems umfasst ist, mit Hilfe der Einlager-Fördertechnik, wobei das Umladen und Einlagern ohne Bezug zu einem Kommissionierauftrag erfolgt, und wobei das Warenlager-Hängewaren-Ladehilfsmittel insbesondere eine Hängestange umfasst,
g') Erfassen von Kommissionieraufträgen zum Kommissionieren von Auftrags-Hängewaren, welche von den Auftragswaren umfasst sind,
h') Bearbeitung eines Kommissionierauftrags umfassend die Schritte
   - Auslagern eines Warenlager-Hängewaren-Ladehilfsmittels, welches zumindest eine dem Kommissionierauftrag zugeordnete Auftrags-Hängeware enthält, aus dem Hängewaren-Warenlager mit Hilfe der Auslager-Fördertechnik und
   - Beladen eines Ziel-Ladehilfsmittels mit der zumindest einen Auftrags-Hängeware an einer Kommissionierstation.

Demgemäß ist es auch von Vorteil, wenn
- der Wareneingang für die Bereitstellung gemischter Ware ausgebildet ist, welche auch Hängeware umfasst,
- ein dem Wareneingang fördertechnisch nachgelagertes Hängewaren-Warenlager vorgesehen ist, das vom Warenlager des Lager- und Kommissioniersystems umfasst ist,
- die Kommissionierstation dem Hängewaren-Warenlager fördertechnisch nachgelagert ist und über eine Auslager-Fördertechnik fördertechnisch mit dem Hängewaren-Warenlager verbunden ist,
- die erste Beladestation für die artikelreine Beladung von Hängetaschen und/oder von Hängewaren-Transportträgern mit der bereitgestellten Hängeware ausgebildet ist,
- die Hängetaschen-Sortiereinrichtung auch für den Transport von Hängewaren-Transportträgern ausgebildet ist,
- die zweite Beladestation dem Hängewaren-Warenlager fördertechnisch vorgelagert ist und über die Einlager-Fördertechnik fördertechnisch mit dem Hängewaren-Warenlager verbunden ist und dass die zweite Beladestation auch für das Umladen der in den Hängetaschen und/oder auf den Hängewaren-Transportträgern artikelrein geladenen Hängeware von den Hängetaschen und/oder den Hängewaren-Transportträgern in/auf ein Warenlager-Hängewaren-Ladehilfsmittel ausgebildet ist, wobei das Warenlager-Hängewaren-Ladehilfsmittel von Warenlager-Ladehilfsmitteln umfasst ist und insbesondere eine Hängestange aufweist, und
- das Steuersystem auch dazu eingerichtet ist,
   i) eine Warentype einer in/auf die Hängetasche und/oder auf den Hängewaren-Transportträger geladenen Hängeware zu erfassen und
   ii) die Hängetaschen-Sortiereinrichtung zur Bildung von Gruppen von Hängetaschen und/oder Hängewaren-Transportträgern basierend auf einer Waren-Gruppier-Vorschrift, welche einer Gruppe jeweils eine oder mehrere vorgebbare Warentypen zuweist, anzusteuern und
   iii) die Hängetaschen-Fördertechnik für einen Transport der Gruppen von Hängetaschen und/oder Hängewaren-Transportträgern zu einer zweiten Beladestation anzusteuern und
   iv) das Umladen der in/auf den Hängetaschen und/oder auf den Hängewaren-Transportträgern geladenen Hängeware von den Hängetaschen und/oder von den Hängewaren-Transportträgern einer Gruppe von Hängetaschen und/oder Hängewaren-Transportträgern in/auf ein Warenlager-Hängewaren-Ladehilfsmittel auszulösen und das Einlagern des Warenlager-Hängewaren-Ladehilfsmittels in das Hängewaren-Warenlager mit Hilfe der Einlager-Fördertechnik ohne Bezug zu einem Kommissionierauftrag auszulösen und
   v) auch Kommissionieraufträge zum Kommissionieren von Auftrags-Hängewaren, welche von Auftragswaren umfasst sind, zu erfassen und
   vi) einen Kommissionierauftrag zu bearbeiten, indem das Steuersystem auch dazu eingerichtet ist,
- das Auslagern eines Warenlager-Hängewaren-Ladehilfsmittels, welches zumindest eine dem Kommissionierauftrag zugeordnete Auftrags-Hängeware enthält, aus dem Hängewaren-Warenlager mit Hilfe der Auslager-Fördertechnik auszulösen und
- das Beladen eines Ziel-Ladehilfsmittels mit der zumindest einen Auftrags-Hängeware an einer Kommissionierstation anzusteuern.

"Hängewaren" sind Waren, die hängend transportiert und gelagert werden, beispielswiese auf einem Kleiderbügel. Beispiele von Hängewaren sind Kleidungsstücke, die an Kleiderbügeln hängen. "Hängeware" steht im vorliegenden Zusammenhang im Gegensatz zu "Liegeware". Bei Liegeware handelt es sich um Ware, die auf einem Untergrund liegend transportiert und gelagert wird. Demgegenüber hängt Hängeware unterhalb der Hängebahnen der Hängetaschen-Sortiereinrichtung, Hängetaschen-Fördertechnik und dergleichen. An dieser Stelle wird angemerkt, dass eine Ware, die hängend transportiert werden kann, nicht automatisch zur Hängeware wird. Es ist nämlich auch denkbar, dass Hängeware auch liegend transportiert wird. Beispielweise kann eine Ware durch das Zusammenlegen nicht als Hängeware, sondern als Liegeware behandelt werden. So ist ein Hemd nicht automatisch eine Hängeware, sondern dies hängt davon ab, ob das Hemd hängend oder liegend transportiert wird.

Ein "Hängewaren-Warenlager" dient der Lagerung von Hängewaren.

Ein "Warenlager-Hängewaren-Ladehilfsmittel" dient der Aufnahme einer Hängeware. Als Warenlager-Hängewaren-Ladehilfsmittel kann eine Hängestange verstanden werden, auf welcher mehrere Hängewaren über Kleiderbügel aufgehängt sind. Eine solche Hängestange kann Teil eines mobilen Regals oder Teil eines mobilen Regalbediengeräts sein, aber auch im Hängewaren-Warenlager montiert sein. Anderenfalls kann das "Warenlager-Hängewaren-Ladehilfsmittel" ein Fahrwerk mit Laufrädern und die am Fahrwerk befestigte oder vom Fahrwerk entfernbare Hängestange umfassen, wobei das "Warenlager-Hängewaren-Ladehilfsmittel" mit dem Fahrwerk an einer (ortsfesten) Hängebahn angeordnet und entlang der Hängebahn (angetrieben oder nicht angetrieben) bewegt werden kann. Als Warenlager-Hängewaren-Ladehilfsmittel können aber auch miteinander verhakte Kleiderbügel verstanden werden, wobei je Kleiderbügel eine Hängeware aufgenommen wird. In einem Sonderfall bildet eine Hängetasche selbst das Warenlager-Hängewaren-Ladehilfsmittel oder einen Teil davon, nämlich dann, wenn die Hängetasche im Innen- und/oder Außenbereich einen Haken oder eine Öse aufweist, auf welcher ein Kleiderbügel auf- oder eingehängt werden kann.

An dieser Stelle wird angemerkt, dass Liegewaren im Rahmen dieser Offenbarung in Liegewaren-Ladehilfsmitteln transportiert und gelagert werden, wobei die Liegewaren-Ladehilfsmittel bei der Lagerung in Liegewaren-Warenlager eingelagert werden. Hängewaren werden dagegen in Hängewaren-Ladehilfsmitteln transportiert und gelagert, wobei die Hängewaren-Ladehilfsmittel bei der Lagerung in Hängewaren-Warenlager eingelagert werden. Die allgemeinen Begriffe "Waren", "Warenlager-Ladehilfsmittel", "Warenlager", "Auftragsware", usw. sind dementsprechend als "Liegewaren", "Warenlager-Liegewaren-Ladehilfsmittel", "Liegewaren-Warenlager", "Auftrags-Liegeware" zu lesen, wenn die betreffende Textstelle Liegeware betrifft, und als "Hängewaren", "Warenlager-Hängewaren-Ladehilfsmittel", "Hängewaren-Warenlager", "Auftrags-Hängeware", wenn die betreffende Textstelle Hängeware betrifft.

Vorteilhaft ist es, wenn die Schritte e) und f) ausgeführt werden, wenn die Anzahl der Hängetaschen einer Gruppe einen Hängetaschen-Gruppengrößen-Schwellwert oder die Anzahl der Waren in den Hängetaschen einer Gruppe einen Waren-Gruppengrößen-Schwellwert erreicht. Demzufolge werden die betreffenden Hängetaschen zur zweiten Beladestation transportiert und die in den Hängetaschen enthaltenen Waren in ein Warenlager-Ladehilfsmittel umgeladen, wenn die obige Bedingung zutrifft. Ist der Hängetaschen-Gruppengrößen-Schwellwert oder der Waren-Gruppengrößen-Schwellwert dagegen noch nicht erreicht, so wird weiter versucht eine Gruppe zu bilden beziehungsweise die Gruppe zu vergrößern. Hierzu werden die Hängetaschen sortiert und/oder gepuffert. Durch die vorgeschlagenen Maßnahmen soll verhindert werden, dass zu kleine Gruppen zur zweiten Beladestation transportiert werden und das vorgestellte Verfahren an Effizienz verliert.

Vorteilhaft ist es auch, wenn die Schritte e) und f) ausgeführt werden, wenn die Verweilzeit von Hängetaschen, Hängetaschen-Gruppen oder Waren in der Hängetaschen-Sortiereinrichtung einen Verweilzeit-Schwellwert erreicht. Demzufolge werden die betreffenden Hängetaschen zur zweiten Beladestation transportiert und die in den Hängetaschen enthaltenen Waren in ein Warenlager-Ladehilfsmittel umgeladen, wenn die obige Bedingung zutrifft, um zu vermeiden, dass die Hängetaschen zu lange in der Hängetaschen-Sortiereinrichtung verbleiben. Insbesondere werden auch einzelne Hängetaschen zur zweiten Beladestation transportiert, für die kein Partner gefunden werden kann und die demzufolge keiner Gruppe angehören. Ist der Verweilzeit-Schwellwert dagegen noch nicht erreicht, so wird weiter versucht eine Gruppe zu bilden beziehungsweise diese zu vergrößern. Hierzu werden die Hängetaschen sortiert und/oder gepuffert.

Günstig ist es weiterhin, wenn ausschließlich Retourware in die Hängetaschen geladen und nach den Schritten b) bis h) behandelt werden. Für diese Warenklasse eignet sich das vorgestellte Verfahren in besonderer Weise, da Retourware in der Regel gemischt und mit kleiner Stückzahl pro Warentype am Wareneingang bereitgestellt wird.

Von Vorteil ist es auch, wenn nicht weniger als 10% der Hängetaschen, welche die Hängetaschen-Sortiereinrichtung durchlaufen oder in der Hängetaschen-Sortiereinrichtung vorrätig sind, im Schritt d) einer Gruppe zugeordnet werden. Auf diese Weise kann das Lager- und Kommissioniersystem besonders effizient betrieben werden.

Von Vorteil ist es darüber hinaus, wenn der Schritt a) auch das Bereitstellen von Ware am Wareneingang des Lager- und Kommissioniersystems umfasst, welche mit Hilfe eines Anliefer-Ladehilfsmittels artikelrein bereitgestellt wird, und ein Einlagern dieser Ware in das Warenlager unter Umgehung der Schritte b) bis f) und ohne Bezug zu einem Kommissionierauftrag erfolgt, wobei
- das genannte Anliefer-Ladehilfsmittel direkt in das Warenlager eingelagert wird oder
- die genannte Ware an der zweiten Beladestation oder an einer dritten Beladestation vom Anliefer-Ladehilfsmittel in ein Warenlager-Ladehilfsmittel umgeladen wird, und das beladene Warenlager-Ladehilfsmittel in das Warenlager eingelagert wird.

Das heißt, mit Hilfe eines Anliefer-Ladehilfsmittels artikelrein bereitgestellte Ware kann unter Umgehung der Hängetaschen-Sortiereinrichtung in das Warenlager eingelagert werden, wodurch die Hängetaschen-Sortiereinrichtung entlastet wird und daher kleiner dimensioniert werden kann.

Günstig ist es weiterhin, wenn im Schritt b) in jede Hängetasche eine einzige Ware geladen wird. Auf diese Weise ist der Beladevorgang der Hängetasche, das Bilden von Hängetaschen-Gruppen sowie das Entladen der Hängetaschen auf besonders einfache Weise möglich.

Besonders vorteilhaft ist es, wenn der Hängetaschen-Gruppe durch die Waren-Gruppier-Vorschrift genau eine vorgebbare Warentype zugewiesen wird und die Hängetaschen-Gruppen mit Waren der gleichen Warentype gebildet werden. Auf diese Weise kann das falsche Beladen eines Warenlager-Ladehilfsmittels oder eines Ziel-Ladehilfsmittels praktisch ausgeschlossen werden.

Besonders vorteilhaft ist es aber auch, wenn der Hängetaschen-Gruppe durch die Waren-Gruppier-Vorschrift mehrere vorgebbare Warentypen zugewiesen werden und die Hängetaschen-Gruppen mit Waren unterschiedlicher Warentype gebildet werden, wobei
- ein Volumen einer ersten Ware einer ersten Warentype zumindest zweimal so groß ist wie ein Volumen einer zweiten Ware einer zweiten Warentype und/oder
- ein Gewicht einer ersten Ware einer ersten Warentype zumindest zweimal so groß ist wie ein Gewicht einer zweiten Ware einer zweiten Warentype und/oder
- eine längste Abmessung einer ersten Ware einer ersten Warentype zumindest zweimal so groß ist wie eine längste Abmessung einer zweiten Ware einer zweiten Warentype und/oder
- ein optischer Reflexionsgrad einer ersten Ware einer ersten Warentype zumindest zweimal so groß ist wie ein optischer Reflexionsgrad einer zweiten Ware einer zweiten Warentype und/oder
- eine Farbe einer ersten Ware einer ersten Warentype in einem Farbkreis (insbesondere in einem Farbkreis nach Itten) einen Abstand von zumindest 30° zu einer Farbe einer zweiten Ware einer zweiten Warentype aufweist.

Auf diese Weise sind die in den Hängetaschen einer Hängetaschen-Gruppe enthaltenen Waren durch eine Person oder auch durch ein optisches Bilderfassungssystem eines Roboters gut unterscheidbar. Demzufolge kann das Beladen eines Warenlager-Ladehilfsmittels und/oder das Beladen eines Ziel-Ladehilfsmittels auch dann mit sehr geringer Fehlerquote erfolgen, wenn die Hängetaschen einer Hängetaschen-Gruppe Waren mehrerer Warentypen enthalten. Das heißt, es wird selten oder nie eine Ware einer falschen Warentype in das Warenlager-Ladehilfsmittel oder Ziel-Ladehilfsmittel geladen.

Vorteilhaft ist es weiterhin, wenn die Hängetaschen einer Gruppe nach dem Schritt d) in Bezug auf die Warentype der in ihnen enthaltenen Waren innerhalb der Gruppe sortiert in Blöcken vorliegen. Innerhalb einer Gruppe folgt dann einem Block mit Waren einer ersten Warentype ein Block mit Waren einer zweiten Warentype und so weiter. Auf diese Weise ist eine artikelreine Beladung von Warenlager-Ladehilfsmitteln selbst dann auf einfache und effiziente Weise möglich, wenn Hängetaschen-Gruppen Waren unterschiedlicher Warentype umfassen. Selbstverständlich kann ein Block auch als eigenständige Hängetaschen-Gruppe angesehen werden.

Vorteilhaft ist es aber auch, wenn die Hängetaschen einer Gruppe nach dem Schritt d) in Bezug auf die Warentype der in ihnen enthaltenen Waren innerhalb der Gruppe chaotisch verteilt sind. Das heißt, in diesem Fall werden nicht zwingend Blöcke gleicher Warentype gebildet. Der Sortieraufwand zum Bilden einer Gruppe kann dann gering gehalten werden.

Besonders vorteilhaft ist es, wenn die Warenlager-Ladehilfsmittel im Schritt f) an der zweiten Beladestation artikelrein mit Waren einer (einzigen) Warentype beladen werden. Auf diese Weise kann das falsche Beladen eines Ziel-Ladehilfsmittels beim Kommissionieren praktisch ausgeschlossen werden.

Besonders vorteilhaft ist es aber auch, wenn die Warenlager-Ladehilfsmittel im Schritt f) an der zweiten Beladestation mit Waren unterschiedlicher Warentype beladen werden, wobei
- ein Volumen einer ersten Ware einer ersten Warentype zumindest zweimal so groß ist wie ein Volumen einer zweiten Ware einer zweiten Warentype und/oder
- ein Gewicht einer ersten Ware einer ersten Warentype zumindest zweimal so groß ist wie ein Gewicht einer zweiten Ware einer zweiten Warentype und/oder
- eine längste Abmessung einer ersten Ware einer ersten Warentype zumindest zweimal so groß ist wie eine längste Abmessung einer zweiten Ware einer zweiten Warentype und/oder
- ein optischer Reflexionsgrad einer ersten Ware einer ersten Warentype zumindest zweimal so groß ist wie ein optischer Reflexionsgrad einer zweiten Ware einer zweiten Warentype und/oder
- eine Farbe einer ersten Ware einer ersten Warentype in einem Farbkreis (insbesondere in einem Farbkreis nach Itten) einen Abstand von zumindest 30° zu einer Farbe einer zweiten Ware einer zweiten Warentype aufweist.

Auf diese Weise sind die in den Warenlager-Ladehilfsmitteln enthaltenen Waren durch eine Person oder auch durch ein optisches Bilderfassungssystem eines Roboters gut unterscheidbar. Demzufolge kann das Beladen eines Ziel-Ladehilfsmittels beim Kommissionieren auch dann mit sehr geringer Fehlerquote erfolgen, wenn die Warenlager-Ladehilfsmittel Waren mehrerer Warentypen enthalten. Das heißt, es wird selten oder nie eine Ware einer falschen Warentype in das Ziel-Ladehilfsmittel abgegeben.

Besonders vorteilhaft ist es schließlich, wenn im Schritt g) geprüft wird, ob eine zu kommissionierende Auftragsware in der Hängetaschen-Sortiereinrichtung vorrätig ist und bei positivem Ausgang der Prüfung statt dem Schritt h) für die Bearbeitung eines Kommissionierauftrags
- eine Hängetasche, welche zumindest eine dem Kommissionierauftrag zugeordnete Auftragsware enthält, mit Hilfe einer Hängetaschen-Fördertechnik aus der Hängetaschen-Sortiereinrichtung ausgelagert wird und
- ein Ziel-Ladehilfsmittel an einer Kommissionierstation mit der zumindest einen Auftragsware beladen wird.

Dadurch kann das Warenlager entlastet und kleiner dimensioniert werden, da eine Ware, die für einen Kommissioniervorgang benötigt wird, nicht zwingend zuvor in das Warenlager eingelagert werden muss.

An dieser Stelle wird angemerkt, dass sich die zum vorgestellten Lager- und Kommissioniersystem offenbarten Varianten und Vorteile gleichermaßen auf das vorgestellte Verfahren beziehen und umgekehrt.

Zum besseren Verständnis der Erfindung wird diese anhand der nachfolgenden Figuren näher erläutert.

Es zeigen jeweils in stark vereinfachter, schematischer Darstellung:
- Fig. 1: die prinzipielle Struktur des vorgestellten Lager- und Kommissioniersystems;
- Fig. 2: einen ersten Teil des grundsätzlichen Ablaufs beim Durchlauf von Waren durch das Lager- und Kommissioniersystem;
- Fig. 3: den an den ersten Teil anschließenden zweiten Teil des grundsätzlichen Ablaufs beim Durchlauf von Waren durch das Lager- und Kommissioniersystem;
- Fig. 4: ein detailliert dargestelltes Beispiel eines Lager- und Kommissioniersystems in Draufsicht;
- Fig. 5: ein Beispiel für ein autonomes Flurförderfahrzeug in Schrägansicht;
- Fig. 6: ähnlich wie Fig. 4, jedoch mit einem zusätzlichen Hängewaren-Warenlager;
- Fig. 7: ein beispielhaftes Hängewaren-Warenlager in Schrägansicht;
- Fig. 8: eine Schrägansicht eines beispielhaften Regalbediengeräts, das für die Manipulation von Hängewaren ausgebildet ist, in Fahrstellung;
- Fig. 9: das Regalbediengerät aus Fig. 8 in Ein-/Auslagerstellung und
- Fig. 10: einen beispielhaften Hängewaren-Transportträger in Schrägansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

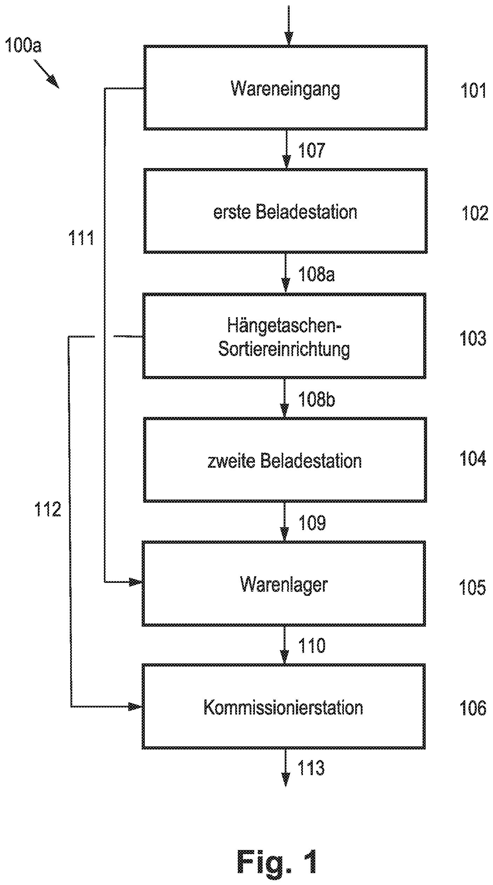

Fig. 1 zeigt die grundlegende Struktur des Lager- und Kommissioniersystems 100a. Das Lager- und Kommissioniersystem 100a umfasst:
- einen Wareneingang 101 für die Bereitstellung vorwiegend gemischter Ware,
- eine dem Wareneingang 101 fördertechnisch nachgelagerte erste Beladestation 102, welche für die artikelreine Beladung von Hängetaschen mit der am Wareneingang 101 bereitgestellten Ware ausgebildet ist,
- eine der ersten Beladestation 102 fördertechnisch nachgelagerte Hängetaschen-Sortiereinrichtung 103 für die Hängetaschen,
- eine der Hängetaschen-Sortiereinrichtung 103 fördertechnisch nachgelagerte zweite Beladestation 104, welche für das Umladen der in den Hängetaschen artikelrein enthaltenen Waren von den Hängetaschen in ein Warenlager-Ladehilfsmittel ausgebildet ist, wobei das Warenlager-Ladehilfsmittel unterschiedlich zu einer Hängetasche ausgebildet ist,
- ein der zweite Beladestation 104 fördertechnisch nachgelagertes Warenlager 105 und
- eine dem Warenlager 105 fördertechnisch nachgelagerte Kommissionierstation 106.

Die fördertechnische Verbindung zwischen dem Wareneingang 101 und der zweiten Beladestation 104 erfolgt über eine Wareneingangs-Fördertechnik 107. Die fördertechnische Verbindung zwischen der ersten Beladestation 102, der Hängetaschen-Sortiereinrichtung 103 und der zweiten Beladestation 104 erfolgt über eine Hängetaschen-Fördertechnik, welche hier einen ersten Abschnitt 108a und einen zweiten Abschnitt 108b umfasst. Innerhalb der Hängetaschen-Sortiereinrichtung 103 erfolgt der Transport der Hängetaschen ebenfalls über die Hängetaschen-Fördertechnik. Die fördertechnische Verbindung zwischen der zweiten Beladestation 104 und dem Warenlager 105 erfolgt über eine Einlager-Fördertechnik 109. Die fördertechnische Verbindung zwischen dem Warenlager 105 und der Kommissionierstation 106 erfolgt über eine Auslager-Fördertechnik 110.

Das in der Fig. 1 beispielhaft dargestellte Lager- und Kommissioniersystem 100a umfasst auch eine optionale erste fördertechnische Bypass-Verbindung 111 vom Wareneingang 101 in das Warenlager 105 und unabhängig davon eine optionale zweite fördertechnische Bypass-Verbindung 112 von der Hängetaschen-Sortiereinrichtung 103 in die Kommissionierstation 106. Schließlich ist in der Fig. 1 auch eine von der Kommissionierstation 106 wegführende Warenausgangs-Fördertechnik 113 vorgesehen.

Generell können die fördertechnischen Verbindungen im Lager- und Kommissioniersystem 100a, das heißt insbesondere die Wareneingangs-Fördertechnik 107, die Hängetaschen-Fördertechnik 108a, 108b, die Einlager-Fördertechnik 109, die Auslager-Fördertechnik 110, die erste Bypass-Verbindung 111, die zweite Bypass-Verbindung 112 und/oder die Warenausgangs-Fördertechnik 113 ortsfeste Fördertechnik und/oder autonome Flurförderfahrzeuge umfassen.

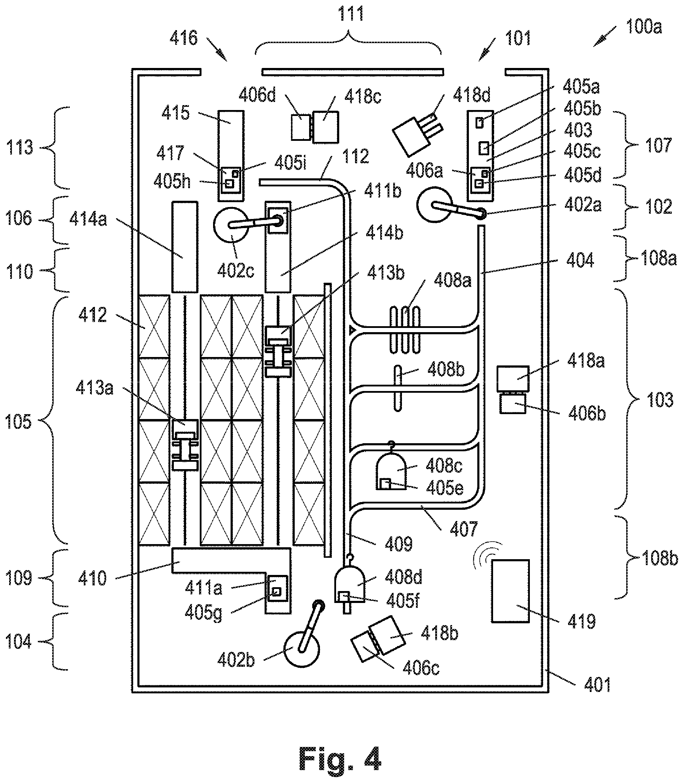

Eine detaillierte Darstellung eines beispielhaften Lager- und Kommissioniersystems 100a kann der Fig. 4 entnommen werden.

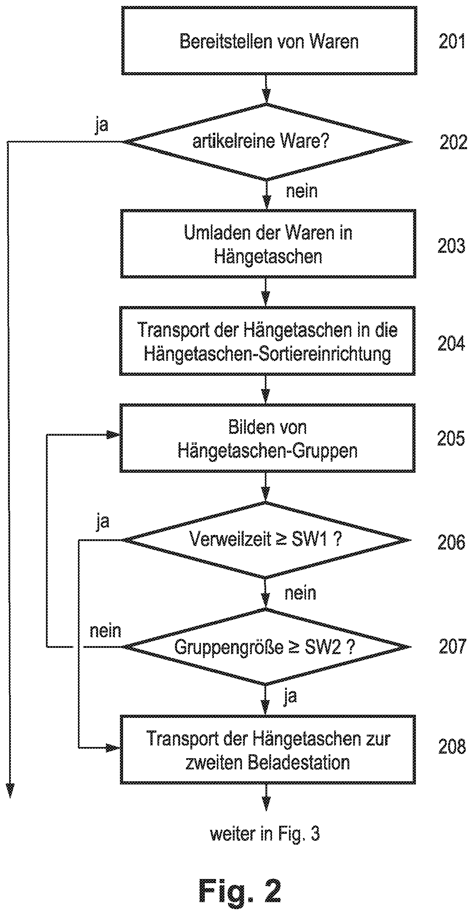

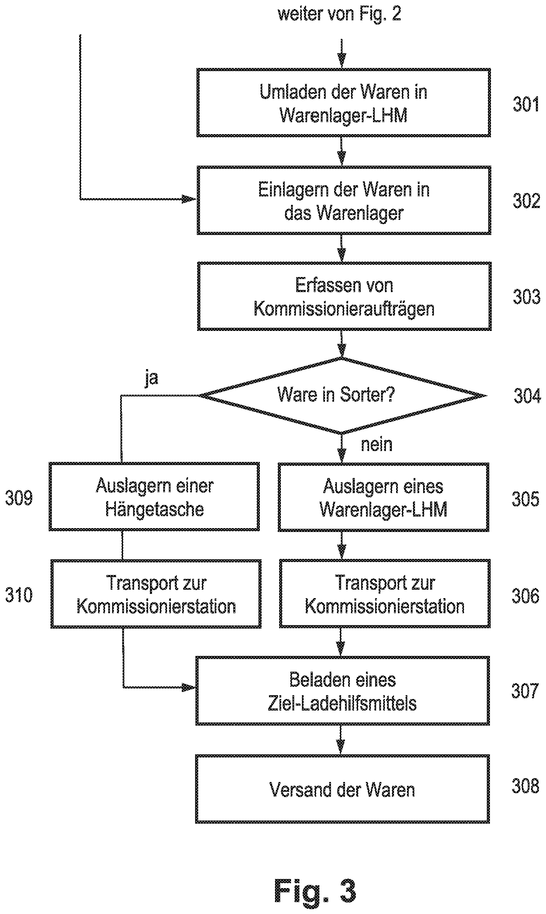

Fig. 2 und 3 zeigen nun den grundsätzlichen Ablauf des vorgestellten Verfahrens zum Betrieb des Lager- und Kommissioniersystems 100a beziehungsweise beim Durchlauf von Waren durch das Lager- und Kommissioniersystem 100a:
In einem Schritt 201 oder a) werden (vorwiegend) gemischte Waren, das heißt Waren unterschiedlicher Warentype, am Wareneingang 101 des Lager- und Kommissioniersystems 100a bereitgestellt.

Vorzugsweise erfolgt in einem Schritt 202 die Prüfung, ob die bereitgestellte Ware artikelrein ist. Wurde gemischte (also nicht artikelreine) Ware bereitgestellt, dann wird diese in einem Schritt 203 oder b) in der ersten Beladestation 102 in Hängetaschen geladen. Die Hängetaschen werden dabei artikelrein beladen, das heißt eine Hängetasche wird mit einer Ware oder mit mehreren Waren der gleichen Warentype beladen. Darüber hinaus wird die Warentype der in die Hängetasche geladenen Ware erfasst und die Zuordnung, in welcher Hängetasche Ware welcher Warentype enthalten ist, für die spätere Verwendung gespeichert. Vorzugsweise wird im Schritt 203 oder b) in jede Hängetasche eine einzige Ware geladen. Denkbar ist aber auch eine Beladung der Hängetaschen mit einer variierenden Anzahl an Waren.

In einem Schritt 204 oder c) werden die beladenen Hängetaschen in die Hängetaschen-Sortiereinrichtung 103 (kurz "Sorter") transportiert.

In einem Schritt 205 oder d) werden in der Hängetaschen-Sortiereinrichtung 103 Gruppen von Hängetaschen basierend auf einer Waren-Gruppier-Vorschrift gebildet. Die Waren-Gruppier-Vorschrift weist einer Gruppe jeweils eine oder mehrere vorgebbare Warentypen zu. Demgemäß kann eine Hängetaschen-Gruppe Waren einer einzigen vorgegebenen Warentype oder Waren mehrerer, vorgegebener Warentypen umfassen. Die Waren-Gruppier-Vorschrift kann vom Betreiber des Lager- und Kommissioniersystems 100a eingegeben werden und von einem Steuersystem des Lager- und Kommissioniersystems 100a erfasst und verarbeitet werden. Die Waren-Gruppier-Vorschrift kann auch als Beladeauftrag für ein Warenlager-Ladehilfsmittel verstanden werden.

In einem optionalen Schritt 206 wird geprüft, ob die Verweilzeit einer Hängetasche oder einer Ware in der Hängetaschen-Sortiereinrichtung einen Verweilzeit-Schwellwert SW1 erreicht und/oder ob die Verweilzeit einer Gruppe von Hängetaschen oder Waren der Hängetaschen-Gruppe in der Hängetaschen-Sortiereinrichtung 103 einen Verweilzeit-Schwellwert SW1 erreicht. Trifft dies zu, so werden die betreffenden Hängetaschen in einem Schritt 208 oder e) zur zweiten Beladestation 104 transportiert, um zu vermeiden, dass die Hängetaschen zu lange in der Hängetaschen-Sortiereinrichtung 103 verbleiben. Insbesondere werden auch einzelne Hängetaschen zur zweiten Beladestation 104 transportiert, für die kein Partner gefunden werden kann und die demzufolge keiner Gruppe angehören. Ist der Verweilzeit-Schwellwert SW1 dagegen noch nicht erreicht, so wird weiter versucht eine Gruppe zu bilden beziehungsweise diese zu vergrößern.

In einem davon unabhängigen weiteren optionalen Schritt 207 wird geprüft, ob die Anzahl der Hängetaschen einer Gruppe einen Hängetaschen-Gruppengrößen-Schwellwert SW2 oder die Anzahl der Waren in den Hängetaschen einer Gruppe einen Waren-Gruppengrößen-Schwellwert SW2' erreicht. Trifft dies zu, so werden die betreffenden Hängetaschen im Schritt 208 oder e) zur zweiten Beladestation 104 transportiert. Ist der Hängetaschen-Gruppengrößen-Schwellwert SW2 oder der Waren-Gruppengrößen-Schwellwert SW2' dagegen noch nicht erreicht, so wird weiter versucht eine Gruppe zu bilden beziehungsweise diese zu vergrößern. Auf diese Weise soll verhindert werden, dass zu kleine Gruppen zur zweiten Beladestation 104 transportiert werden und das vorgestellte Verfahren an Effizienz verliert.

In einem Schritt 301 oder f) werden die in den Hängetaschen artikelrein enthaltenen Waren einer Gruppe an der zweiten Beladestation 104 von den Hängetaschen in ein Warenlager-Ladehilfsmittel, kurz "Warenlager-LHM", umgeladen, das unterschiedlich zu einer Hängetasche ausgebildet ist. Im Anschluss wird das Warenlager-Ladehilfsmittel mit den umgeladenen Waren in einem Schritt 302 in das Warenlager 105 eingelagert. Das Umladen und Einlagern erfolgt dabei ohne Bezug zu einem Kommissionierauftrag.

In einem Schritt 303 oder g) werden Kommissionieraufträge zum Kommissionieren von Auftragswaren erfasst.

In einem optionalen Schritt 304 wird geprüft, ob eine zu kommissionierende Auftragsware in der Hängetaschen-Sortiereinrichtung 103 vorrätig ist. Ist die zu kommissionierende Auftragsware in der Hängetaschen-Sortiereinrichtung 103 nicht vorrätig, so wird ein Warenlager-Ladehilfsmittel, welches zumindest eine dem Kommissionierauftrag zugeordnete Auftragsware enthält, in einem Schritt 305 oder h) mit Hilfe der Auslager-Fördertechnik 110 aus dem Warenlager 105 ausgelagert und in einem Schritt 306 zur Kommissionierstation 106 transportiert. In einem Schritt 307 wird an der Kommissionierstation 106 in Folge ein Ziel-Ladehilfsmittel mit der zumindest einen Auftragsware beladen. In einem Schritt 308 erfolgt schließlich der Versand der Waren. Denkbar ist natürlich auch, dass das Ziel-Ladehilfsmittel bis zum Versand zwischengelagert wird.

Ist die zu kommissionierende Auftragsware in der Hängetaschen-Sortiereinrichtung 103 vorrätig, dann wird eine Hängetasche in einem Schritt 309 aus der Hängetaschen-Sortiereinrichtung 103 ausgelagert und unter Zuhilfenahme der zweiten Bypass-Verbindung 112 in einem Schritt 310 zur Kommissionierstation 106 transportiert. Im Schritt 307 wird an der Kommissionierstation 106 in Folge wiederum ein Ziel-Ladehilfsmittel mit der zumindest einen Auftragsware beladen. In gleicher Weise erfolgt im Schritt 308 schließlich der Versand der Waren. Denkbar ist natürlich wiederum auch, dass das Ziel-Ladehilfsmittel bis zum Versand zwischengelagert wird.

An dieser Stelle wird angemerkt, dass ein Kommissionierauftrag ausschließlich mit Waren aus der Hängetaschen-Sortiereinrichtung 103, ausschließlich mit Waren aus dem Warenlager 105 oder gemischt mit Waren aus der Hängetaschen-Sortiereinrichtung 103 und mit Waren aus dem Warenlager 105 zusammengestellt werden kann. Der Vollständigkeit halber wird auch angemerkt, dass ein Ziel-Ladehilfsmittel nach der Beladung sowohl Waren aus der Hängetaschen-Sortiereinrichtung 103 als auch Waren aus dem Warenlager 105 enthalten kann.

Denkbar ist auch, dass die Schritte 304, 309 und 310 fehlen, und Kommissionieraufträge grundsätzlich mit Waren aus dem Warenlager 105 zusammengestellt werden.

Das in den Figuren 2 und 3 dargestellte Ablaufdiagramm umfasst auch eine optionale Verbindung vom Schritt 202 zum Schritt 302. Diese ist dann von Vorteil, wenn der Schritt 201 oder a) auch das Bereitstellen von Ware am Wareneingang 101 des Lager- und Kommissioniersystems 100a umfasst, welche mit Hilfe eines Anliefer-Ladehilfsmittels artikelrein bereitgestellt wird, und ein Einlagern dieser Ware in das Warenlager 105 unter Umgehung der Schritte 203 bis 301 beziehungsweise unter Umgehung der Schritte b) bis f) und ohne Bezug zu einem Kommissionierauftrag erfolgt. Dabei kann das Anliefer-Ladehilfsmittel unter Zuhilfenahme der ersten Bypass-Verbindung 111 direkt in das Warenlager 105 eingelagert werden. Alternativ kann die genannte Ware an der zweiten Beladestation 104 oder an einer dritten Beladestation vom Anliefer-Ladehilfsmittel in ein Warenlager-Ladehilfsmittel umgeladen werden, woraufhin das beladene Warenlager-Ladehilfsmittel in das Warenlager 105 eingelagert wird.

Grundsätzlich kann ein Warenlager-Ladehilfsmittel oder ein Fach eines (fachunterteilten) Warenlager-Ladehilfsmittels im Schritt 301 oder f) mit Waren einer einzigen Warentype, also artikelrein, beladen werden. Denkbar ist aber auch, dass ein Warenlager-Ladehilfsmittel oder ein Fach eines (fachunterteilten) Warenlager-Ladehilfsmittels im Schritt 301 oder f) mit Waren mehrerer vorgegebener Warentypen, also gemischt, beladen wird. Bei gemischter Beladung ist es von Vorteil, wenn
- ein Volumen einer ersten Ware einer ersten Warentype zumindest zweimal so groß ist wie ein Volumen einer zweiten Ware einer zweiten Warentype und/oder
- ein Gewicht einer ersten Ware einer ersten Warentype zumindest zweimal so groß ist wie ein Gewicht einer zweiten Ware einer zweiten Warentype und/oder
- eine längste Abmessung einer ersten Ware einer ersten Warentype zumindest zweimal so groß ist wie eine längste Abmessung einer zweiten Ware einer zweiten Warentype und/oder

- ein optischer Reflexionsgrad einer ersten Ware einer ersten Warentype zumindest zweimal so groß ist wie ein optischer Reflexionsgrad einer zweiten Ware einer zweiten Warentype und/oder
- eine Farbe einer ersten Ware einer ersten Warentype in einem Farbkreis (insbesondere in einem Farbkreis nach Itten) einen Abstand von zumindest 30° zu einer Farbe einer zweiten Ware einer zweiten Warentype aufweist.

Auf diese Weise sind die in den Warenlager-Ladehilfsmitteln gemischt enthaltenen Waren durch eine Person oder auch durch ein optisches Bilderfassungssystem eines Roboters gut unterscheidbar. Demzufolge kann das automatische Beladen eines Ziel-Ladehilfsmittels im Schritt 307 auch dann mit sehr geringer Fehlerquote erfolgen, wenn die Warenlager-Ladehilfsmittel gemischt beladen sind. Das automatische Beladen eines Ziel-Ladehilfsmittels ist beispielweise in der WO 2018/132855 A1 offenbart. Das heißt, es wird selten oder nie eine Ware einer falschen Warentype in das Ziel-Ladehilfsmittel geladen. Bei einer artikelreinen Beladung des Warenlager-Ladehilfsmittels ist das falsche Beladen des Ziel-Ladehilfsmittels ohnehin praktisch ausgeschlossen.

In ganz ähnlicher Weise kann die Bildung von Hängetaschen-Gruppen erfolgen. Wie bereits erwähnt wurde, können im Schritt 205 oder d) Gruppen von Hängetaschen mit Waren der gleichen Warentype oder mit Waren unterschiedlicher Warentype gebildet werden. Werden Hängetaschen-Gruppen mit Waren unterschiedlicher Warentype gebildet, dann ist es von Vorteil, wenn
- ein Volumen einer ersten Ware einer ersten Warentype zumindest zweimal so groß ist wie ein Volumen einer zweiten Ware einer zweiten Warentype und/oder
- ein Gewicht einer ersten Ware einer ersten Warentype zumindest zweimal so groß ist wie ein Gewicht einer zweiten Ware einer zweiten Warentype und/oder
- eine längste Abmessung einer ersten Ware einer ersten Warentype zumindest zweimal so groß ist wie eine längste Abmessung einer zweiten Ware einer zweiten Warentype und/oder
- ein optischer Reflexionsgrad einer ersten Ware einer ersten Warentype zumindest zweimal so groß ist wie ein optischer Reflexionsgrad einer zweiten Ware einer zweiten Warentype und/oder
- eine Farbe einer ersten Ware einer ersten Warentype in einem Farbkreis (insbesondere in einem Farbkreis nach Itten) einen Abstand von zumindest 30° zu einer Farbe einer zweiten Ware einer zweiten Warentype aufweist.

Auf diese Weise sind die in den Hängetaschen einer Hängetaschen-Gruppe enthaltenen Waren durch eine Person oder auch durch einen Roboter gut unterscheidbar. Demzufolge kann das Beladen eines Warenlager-Ladehilfsmittels im Schritt 301 und/oder das Beladen eines Ziel-Ladehilfsmittels im Schritt 307 auch dann mit sehr geringer Fehlerquote erfolgen, wenn die Hängetaschen einer Hängetaschen-Gruppe Waren mehrerer Warentypen enthalten. Das heißt, es wird selten oder nie eine Ware einer falschen Warentype in das Warenlager-Ladehilfsmittel oder Ziel-Ladehilfsmittel geladen. Enthalten die Hängetaschen einer Hängetaschen-Gruppe Waren einer einzigen Warentype, dann ist das falsche Beladen eines Warenlager-Ladehilfsmittels oder eines Ziel-Ladehilfsmittels ohnehin praktisch ausgeschlossen.

Werden Hängetaschen-Gruppen mit Waren unterschiedlicher Warentype gebildet, dann ist es weiterhin von Vorteil, wenn die Hängetaschen einer Gruppe nach dem Schritt 205 oder d) in Bezug auf die Warentype der in ihnen enthaltenen Waren innerhalb der Gruppe sortiert in Blöcken vorliegen. Innerhalb einer Gruppe folgt dann einem Block mit Waren einer ersten Warentype ein Block mit Waren einer zweiten Warentype und so weiter. Auf diese Weise ist eine artikelreine Beladung von Warenlager-Ladehilfsmitteln im Schritt 301 selbst dann auf einfache und effiziente Weise möglich, wenn Hängetaschen-Gruppen Waren unterschiedlicher Warentype umfassen. Selbstverständlich kann ein Block auch als eigenständige Hängetaschen-Gruppe angesehen werden.

Denkbar ist aber auch, dass die Hängetaschen einer Gruppe nach dem Schritt 205 oder d) in Bezug auf die Warentype der in ihnen enthaltenen Waren innerhalb der Gruppe chaotisch verteilt sind. Das heißt, in diesem Fall werden nicht zwingend Blöcke gleicher Warentype gebildet. Der Sortieraufwand zum Bilden einer Gruppe kann dann gering gehalten werden.

Das vorgestellte Verfahren eignet sich insbesondere zum Ein- beziehungsweise Rücklagern von Retourware, die in der Regel gemischt und mit kleiner Stückzahl pro Warentype am Wareneingang 101 bereitgestellt wird. Von Vorteil ist es daher, wenn ausschließlich Retourware in die Hängetaschen geladen und nach den Schritten 203 bis 308 beziehungsweise nach den Schritten b) bis h) behandelt wird.

Von Vorteil ist es auch, wenn nicht weniger als 10% der Hängetaschen, welche die Hängetaschen-Sortiereinrichtung 103 durchlaufen oder in der Hängetaschen-Sortiereinrichtung 103 vorrätig sind, im Schritt 205 oder d) einer Gruppe zugeordnet werden. Auf diese Weise kann das Lager- und Kommissioniersystem 100 besonders effizient betrieben werden.

Fig. 4 zeigt nun eine etwas detailliertere Darstellung des beispielhaften Lager- und Kommissioniersystems 100a.

Konkret sind die erste Beladestation 102, die Hängetaschen-Sortiereinrichtung 103, die zweite Beladestation 104, das Warenlager 105 und die Kommissionierstation 106 in einem Gebäude 401 untergebracht. Der Wareneingang 101 selbst ist Teil des Gebäudes 401 in Form einer Gebäudeöffnung.

Die erste Beladestation 102 kann einen ersten Roboter 402a, eine erste Andienposition auf einem Förderer 403 der Wareneingangs-Fördertechnik 107 und eine zweite Andienposition auf einer Hängeförderbahn 404 auf dem ersten Abschnitt 108a der Hängetaschen-Fördertechnik umfassen. Auf dem Förderer 403 der Wareneingangs-Fördertechnik 107 sind beispielhaft mehrere Waren 405a..405d angeordnet. Die Waren 405c und 405d liegen dabei in einem Anliefer-Ladehilfsmittel 406a, die Waren 405a und 405b liegen lose (das heißt, ohne Anliefer-Ladehilfsmittel 406a) auf dem Förderer 403. Der Förderer 403 der Wareneingangs-Fördertechnik 107 führt vom Wareneingang 101 zum ersten Roboter 402a, und die Hängeförderbahn 404 auf dem ersten Abschnitt 108a der Hängetaschen-Fördertechnik führt vom ersten Roboter 402a zur Hängetaschen-Sortiereinrichtung 103.

Die Hängetaschen-Sortiereinrichtung 103 umfasst mehrere Sortierbahnen 407, in den beispielhaft einige Hängetaschen 408a..408c dargestellt sind. Die Hängetasche 408c ist dabei um 90° in die Zeichenebene gedreht gezeichnet, um die darin gelagerter Ware 405e darstellen zu können. Natürlich hängt die Hängetasche 408c in der Realität wie die Hängetaschen 408a, 408b nach unten. Von der Hängetaschen-Sortiereinrichtung 103 führt eine Hängeförderbahn 409 auf dem zweiten Abschnitt 108b der Hängetaschen-Fördertechnik zur zweiten Beladestation 104. Die zweite Beladestation 104 kann einen zweiten Roboter 402b, eine erste Andienposition auf der Hängeförderbahn 409 auf dem zweiten Abschnitt 108b der Hängetaschen-Fördertechnik und eine zweite Andienposition auf einem Förderer 410 der Einlager-Fördertechnik 109 umfassen, wobei letztere vom zweiten Roboter 402b der zweiten Beladestation 104 zum Warenlager 105 führt.

An der ersten Andienposition der zweiten Beladestation 104 befindet sich im gezeigten Beispiel eine Hängetasche 408d mit einer darin gelagerten Ware 405f. Die Hängetasche 408d ist, wie die Hängetasche 408c, der besseren Darstellbarkeit halber in die Zeichenebene gedreht gezeichnet. An der zweiten Andienposition der zweiten Beladestation 104 befindet sich im gezeigten Beispiel ein Warenlager-Ladehilfsmittel 411a mit einer darin gelagerten Ware 405g.

Das Warenlager 105 umfasst in diesem Beispiel mehrere Lagerregale 412 mit jeweils mehreren Lagerplätzen, sowie Regalbediengeräte 413a und 413b, die in zwischen den Lagerregalen 412 verlaufenden Regalgassen verfahren. An jenem Ende der Regalgassen, welches der Einlager-Fördertechnik 109 gegenüberliegt, sind zwei Förderer 414a, 414b der Auslager-Fördertechnik 110 angeordnet, die vom Warenlager 105 zu einer Kommissionierstation 106 führen.

Die Kommissionierstation 106 kann einen dritten Roboter 402c, eine erste Andienposition auf dem ersten Förderer 414a der Auslager-Fördertechnik 110, eine zweite Andienposition auf dem zweiten Förderer 414b der Auslager-Fördertechnik 110 und eine dritte Andienposition auf einem Förderer 415 der Warenausgangs-Fördertechnik 113 umfassen, wobei letztere den dritten Roboter 402c mit einem Warenausgang 416 verbindet.

An der zweiten Andienposition auf dem zweiten Förderer 414b der Auslager-Fördertechnik 110 befindet sich in diesem Beispiel ein zweites Warenlager-Ladehilfsmittel 411b, und an der dritten Andienposition auf dem Förderer 415 der Warenausgangs-Fördertechnik 113 befindet sich in diesem Beispiel ein Ziel-Ladehilfsmittel 417 mit zwei darin gelagerte Waren 405h, 405i.

In dem in Fig. 4 dargestellten Lager- und Kommissioniersystem 100a befinden sich weiterhin mehrere autonome Flurförderfahrzeuge 418a..418d mit darauf transportierten Anliefer-Ladehilfsmitteln 406b..406d. Zu dem in Fig. 4 dargestellten Zeitpunkt sind die autonomen Flurförderfahrzeuge 418a..418d Teil der ersten Bypass-Verbindung 111 zwischen der ersten Beladestation 102 und dem Warenlager 105. Die autonomen Flurförderfahrzeuge 418a und 418b befinden sich dabei konkret zwischen der ersten Beladestation 102 und der zweiten Beladestation 104, und die autonomen Flurförderfahrzeuge 418c und 418d befinden sich zwischen der ersten Beladestation 102 und der Kommissionierstation 106. Schließlich ist in der Fig. 4 auch eine Förderbahn der zweiten Bypass-Verbindung 112 dargestellt, welche die Hängetaschen-Sortiereinrichtung 103 mit der Kommissionierstation 106 verbindet.

Die Funktion des in der Fig. 4 dargestellten Lager- und Kommissioniersystems 100a gleicht der in den Fig. 2 und 3 dargestellten Funktion des in Fig. 1 dargestellten Lager- und Kommissioniersystems 100 und wird daher nur kurz umrissen.

Im Schritt 201 oder a) werden (vorwiegend) gemischte Waren 405a..405d am Wareneingang 101 des Lager- und Kommissioniersystems 100a bereitgestellt, auf den Förderer 403 der Wareneingangs-Fördertechnik 107 abgegeben, und an der ersten Andienposition der ersten Beladestation 102 angedient. An der zweiten Andienposition der ersten Beladestation 102 wird eine (leere) Hängetasche 408a..408c angedient. Die Waren 405a..405d werden in Folge vom ersten Roboter 402a vom Förderer 403 der Wareneingangs-Fördertechnik 107 oder vom Anliefer-Ladehilfsmittel 406a aufgenommen und artikelrein in die angediente Hängetasche 408a..408c geladen. Vorzugsweise wird jede Hängetasche 408a..408c mit einer einzigen Ware 405a..405d beladen. Denkbar ist aber auch eine Beladung der Hängetasche 408a..408c mit einer variierenden Anzahl an Waren 405a..405d. Die Warentype der in die Hängetasche 408a..408c geladenen Ware 405a..405d wird erfasst und die Zuordnung, in welcher Hängetasche 408a..408c Ware 405a..405d welcher Warentype enthalten ist, wird für die spätere Verwendung gespeichert.

Im Schritt 204 oder c) werden die beladenen Hängetaschen 408a..408c in die Hängetaschen-Sortiereinrichtung 103 transportiert, und im Schritt 205 oder d) werden in der Hängetaschen-Sortiereinrichtung 103 in der schon beschriebenen Weise Gruppen von Hängetaschen 408a..408c basierend auf einer Waren-Gruppier-Vorschrift gebildet.

Die Auslagerung einer Hängetaschen-Gruppe aus der Hängetaschen-Sortiereinrichtung 103 und der Transport der Hängetaschen-Gruppe zur zweiten Beladestation 104 im Schritt 208 oder e) kann im optionalen Schritt 206 (Prüfung der Verweilzeit) oder im optionalen Schritt 207 (Größe einer Hängetaschen-Gruppen) angestoßen werden.

Im Schritt 301 oder f) werden die in den Hängetaschen 408a..408d artikelrein enthaltenen Waren 405a..405f einer Gruppe vom zweiten Roboter 402b der zweiten Beladestation 104 von den Hängetaschen 408a..408d in ein Warenlager-Ladehilfsmittel 411a, 411b umgeladen. Dazu wird eine beladene Hängetasche 408a..408d an der ersten Andienposition der zweiten Beladestation 104 und ein Warenlager-Ladehilfsmittel 411a, 411b an der zweiten Andienposition der zweiten Beladestation 104 angedient. Im Anschluss wird das Warenlager-Ladehilfsmittel 411a, 411b im Schritt 302 mit den umgeladenen Waren 405a..405g in das Warenlager 105 eingelagert. Dazu wird das Warenlager-Ladehilfsmittel 411a, 411b vom Förderer 410 der Einlager-Fördertechnik 109 zu einem der beiden Regalbediengeräte 413a, 413b transportiert, von diesem übernommen und in das Lagerregal 412 eingelagert.

Wird im Schritt 303 oder g) ein Kommissionierauftrag zum Kommissionieren von Auftragswaren erfasst, so wird ein Warenlager-Ladehilfsmittel 411a, 411b, welches zumindest eine dem Kommissionierauftrag zugeordnete Auftragsware 405i, 405h enthält, im Schritt 305 oder h) mit einem der beiden Regalbediengeräte 413a, 413b aus dem Lagerregal 412 ausgelagert und auf den entsprechenden Förderer 414a, 414b der Auslager-Fördertechnik 110 übergeben. Vom Förderer 414a, 414b der Auslager-Fördertechnik 110 wird die Auftragsware 405i, 405h zur ersten oder zweiten Andienposition der Kommissionierstation 106 transportiert und dort angedient. An der dritten Andienposition der Kommissionierstation 106 wird ein Ziel-Ladehilfsmittel 417 angedient. In Folge werden die dem Kommissionierauftrag zugeordneten Auftragswaren 405i, 405h im Schritt 307 vom dritten Roboter 402c vom Warenlager-Ladehilfsmittel 411a, 411b in das Ziel-Ladehilfsmittel 417 geladen.

Im Schritt 308 erfolgt schließlich der Versand der Waren, indem das beladene Ziel-Ladehilfsmittel 417 vom Förderer 415 der Warenausgangs-Fördertechnik 113 zum Warenausgang 416 gefördert und von dort abtransportiert wird. Denkbar ist natürlich auch, dass das Ziel-Ladehilfsmittel 417 bis zum Versand in einem nicht dargestellten Lagerbereich zwischengelagert wird.

Das in den Fig. 2 und 3 dargestellte Ablaufdiagramm enthält zwei optionale Schritte 202 und 304, die auch in dem in Fig. 4 dargestellten Lager- und Kommissioniersystem zur Anwendung kommen können.

Im optionalen Schritt 202 kann geprüft werden, ob die bereitgestellte Ware 405a..405d artikelrein ist. Wird gemischte (also nicht artikelreine) Ware 405a..405d bereitgestellt, dann wird diese in der bereits beschriebenen Weise in das Warenlager 105 eingelagert. Wird dagegen Ware 405a..405d mit Hilfe eines Anliefer-Ladehilfsmittels 406a..406d artikelrein bereitgestellt, dann können diese Waren 405a..405d unter Umgehung der Schritte 203 bis 301 beziehungsweise unter Umgehung der Schritte b) bis f) in das Warenlager 105 eingelagert werden.

Dazu können die Anliefer-Ladehilfsmittel 406b, 406c mit Hilfe der autonomen Flurförderfahrzeuge 418a, 418b über die erste Bypass-Verbindung 111 direkt zur zweiten Beladestation 104 transportiert und dort angedient werden ohne die Hängetaschen-Sortiereinrichtung 103 zu durchlaufen. Dort werden die Waren 405a..405d vom zweiten Roboter 402b in ein an der zweiten Andienposition bereitgestelltes Warenlager-Ladehilfsmittel 405g umgeladen und in der schon beschriebenen Weise in das Warenlager 105 eingelagert. Denkbar wäre auch, dass das Anliefer-Ladehilfsmittel 406b, 406c mit den Waren 405a..405d direkt in das Warenlager 105 eingelagert wird, also ohne dass die Waren 405a..405d in ein Warenlager-Ladehilfsmittel 405g umgeladen werden. Das autonome Flurförderfahrzeug 418a, 418b kann dazu auch eine spezielle Andienposition am Warenlager 105 ansteuern (nicht dargestellt).

Es wäre auch möglich, dass ein Anliefer-Ladehilfsmittel 406d mit Hilfe des autonomen Flurförderfahrzeugs 418c über die erste Bypass-Verbindung 111 direkt zur Kommissionierstation 106 transportiert und dort angedient wird ohne die Hängetaschen-Sortiereinrichtung 103 zu durchlaufen. Dort werden die Waren 405a..405d vom dritten Roboter 402c in ein an der ersten oder zweiten Andienposition bereitgestelltes Warenlager-Ladehilfsmittel 405g umgeladen und mit Hilfe der Auslager-Fördertechnik 110 und der Regalbediengeräte 413a, 413b in das Warenlager 105 eingelagert. Die Auslager-Fördertechnik 110 wird zu diesem Zweck in umgekehrter Richtung betrieben (Reversierbetrieb).

Denkbar wäre auch in diesem Fall, dass das Anliefer-Ladehilfsmittel 406d mit den Waren 405a..405d direkt in das Warenlager 105 eingelagert wird, also ohne dass die Waren 405a..405d in ein Warenlager-Ladehilfsmittel 405g umgeladen werden. Das autonome Flurförderfahrzeug 418c kann dazu wiederum eine spezielle Andienposition am Warenlager 105 ansteuern (nicht dargestellt).

Im optionalen Schritt 304 kann auch geprüft werden, ob eine zu kommissionierende Auftragsware 405i, 405h in der Hängetaschen-Sortiereinrichtung 103 vorrätig ist. Ist die zu kommissionierende Auftragsware 405i, 405h in der Hängetaschen-Sortiereinrichtung 103 nicht vorrätig, so wird diese in der bereits beschriebenen Weise an der Kommissionierstation 106 bereitgestellt.

Ist die zu kommissionierende Auftragsware 405i, 405h jedoch in der Hängetaschen-Sortiereinrichtung 103 vorrätig, dann kann eine Hängetasche 408a..408d im Schritt 309 aus der Hängetaschen-Sortiereinrichtung 103 ausgelagert und im Schritt 310 unter Zuhilfenahme der zweiten Bypass-Verbindung 112 zur Kommissionierstation 106 transportiert und dort angedient werden. Im Schritt 307 werden die Auftragswaren 405i, 405h vom dritten Roboter 402c aus der an der Kommissionierstation 106 angedienten Hängetasche 408a..408d entnommen und in das auf dem Förderer 415 der Warenausgangs-Fördertechnik 113 bereitgestellte Ziel-Ladehilfsmittel 417 abgegeben, das in Folge in der bereits beschriebenen Weise versendet werden kann.

Ein Kommissionierauftrag kann also ausschließlich mit Waren 405e, 405f aus der Hängetaschen-Sortiereinrichtung 103, ausschließlich mit Waren 405i, 405h aus dem Warenlager 105 oder gemischt mit Waren 405e, 405f aus der Hängetaschen-Sortiereinrichtung 103 und mit Waren 405i, 405h aus dem Warenlager 105 zusammengestellt werden. Das Ziel-Ladehilfsmittel 417 kann nach der Beladung somit sowohl Waren 405e, 405f aus der Hängetaschen-Sortiereinrichtung 103 als auch Waren 405i, 405h aus dem Warenlager 105 enthalten.

Werden die Hängetaschen-Gruppen mit Waren 405a..405f unterschiedlicher Warentype gebildet, dann ist es von Vorteil, wenn sich die Warentypen in der weiter oben beschriebenen Art und Weise voneinander unterscheiden. Dadurch kann das Beladen eines Warenlager-Ladehilfsmittels 411a, 411b im Schritt 301 durch den zweiten Roboter 402b oder auch durch eine Person und/oder das Beladen eines Ziel-Ladehilfsmittels im Schritt 307 durch den dritten Roboter 402c oder auch durch eine Person mit sehr geringer Fehlerquote erfolgen, auch wenn die Hängetaschen 408a..408d einer Hängetaschen-Gruppe Waren 405a..405f mehrerer Warentypen enthalten. Wie bereits erwähnt, können Waren 405a..405f mehrerer Warentypen in einer Hängetaschen-Gruppe chaotisch verteilt sein oder sortiert in Blöcken vorliegen.

Werden die Warenlager-Ladehilfsmittel 411a, 411b mit Waren 405a..405f unterschiedlicher Warentype beladen, dann ist es ebenfalls von Vorteil, wenn sich die Warentypen in der weiter oben beschriebenen Art und Weise voneinander unterscheiden. Dadurch kann das Beladen eines Ziel-Ladehilfsmittels 417 im Schritt 307 durch den dritten Roboter 402c oder auch durch eine Person mit sehr geringer Fehlerquote erfolgen, auch wenn die Warenlager-Ladehilfsmittel 411a, 411b Waren 405a..405f mehrerer Warentypen enthalten.

Die übrigen, zu Fig. 4 nicht explizit genannten Aspekte und daraus resultierenden Vorteile können der Beschreibung zu den Fig. 1 bis 3 entnommen werden.

An dieser Stelle wird auch angemerkt, dass der in den Fig. 2 bis 4 beschriebene Ablauf von einem Steuersystem 419 des Lager- und Kommissioniersystems 100a gesteuert wird.

Das Steuersystem 419 ist demzufolge dazu eingerichtet,
i) eine Warentype einer in eine Hängetasche 408a..408d geladenen Ware 405a..405f zu erfassen und,
ii) die Hängetaschen-Sortiereinrichtung 103 zur Bildung von Gruppen von Hängetaschen 408a..408d basierend auf einer Waren-Gruppier-Vorschrift, welche einer Gruppe jeweils eine oder mehrere vorgebbare Warentypen zuweist, anzusteuern und
iii) die Hängetaschen-Fördertechnik 108a, 108b für einen Transport der Gruppen von Hängetaschen 408..408f zu einer zweiten Beladestation 104 anzusteuern und
iv) das Umladen der in den Hängetaschen 408a..408d enthaltenen Waren 405a..405f von den Hängetaschen 408a..408d einer Gruppe von Hängetaschen 408..408f in das Warenlager-Ladehilfsmittel 411a, 411b und das Einlagern der Warenlager-Ladehilfsmittel 411a..411c in das Warenlager 105 mit Hilfe der Einlager-Fördertechnik 109 ohne Bezug zu einem Kommissionierauftrag auszulösen und
v) Kommissionieraufträge zum Kommissionieren von Auftragswaren 405i, 405h zu erfassen und
vi) einen Kommissionierauftrag zu bearbeiten, indem das Steuersystem419 auch dazu eingerichtet ist,
   - das Auslagern eines Warenlager-Ladehilfsmittels 411a, 411b, welches zumindest eine dem Kommissionierauftrag zugeordnete Auftragsware 405i, 405h enthält, aus dem Warenlager 105 mit Hilfe der Auslager-Fördertechnik 110 auszulösen und
   - das Beladen eines Ziel-Ladehilfsmittels 417 mit der zumindest einen Auftragsware 405i, 405h an einer Kommissionierstation 106 anzusteuern.

Das Steuersystem 419 steuert somit die Elemente der Fördertechnik des Lager- und Kommissioniersystems 100a an. Dazu gehören insbesondere die Wareneingangs-Fördertechnik 107, die Hängetaschen-Fördertechnik 108a, 108b, die Einlager-Fördertechnik 109, die Auslager-Fördertechnik 110, die erste Bypass-Verbindung 111, die zweite Bypass-Verbindung 112 und die Warenausgangs-Fördertechnik 113. Weiterhin steuert das Steuersystem 419 die Roboter 402a..402c, die Regalbediengeräte 413a, 413b und die autonomen Flurförderfahrzeuge 418a..418d.

Das Steuersystem 419 ist in der Fig. 4 lediglich symbolisch dargestellt und kann eine Steuerung oder mehrere Steuerungen umfassen, insbesondere auch die Fahrsteuerungen der autonomen Flurförderfahrzeuge 418a..418d.

In dem in Fig. 4 dargestellten Beispiel ist die Wareneingangs-Fördertechnik 107, die Hängetaschen-Fördertechnik 108a, 108b, die Einlager-Fördertechnik 109, die Auslager-Fördertechnik 110, die zweite Bypass-Verbindung 112 und die Warenausgangs-Fördertechnik 113 durch ortsfeste Fördertechnik gebildet, wohingegen die erste Bypass-Verbindung 111 durch die autonomen Flurförderfahrzeuge 418a..418d gebildet ist. Dies ist keine zwingende Voraussetzung, sondern es können auch umgekehrte sowie gemischte Verhältnisse vorliegen. Denkbar ist insbesondere auch, dass die autonomen Flurförderfahrzeuge 418a..418d in die Regalgassen zwischen den Lagerregalen 412 einfahren und (zusätzlich oder alternativ) die Aufgabe der Regalbediengeräte 413a, 413b übernehmen können.

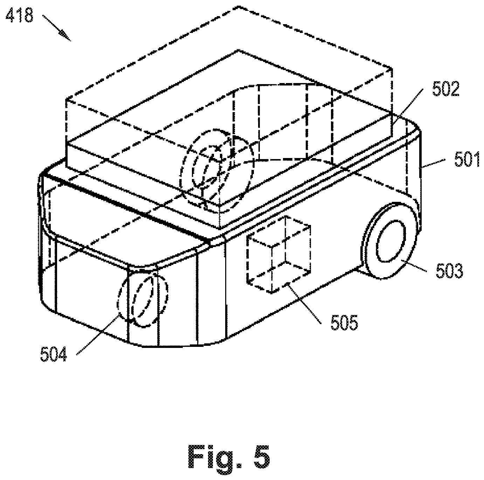

Fig. 5 zeigt schließlich eine mögliche Ausführung eines autonomes Flurförderfahrzeugs 418 (engl.: "automated guided vehicle", kurz "AGV"). Das autonome Flurförderfahrzeug 418 umfasst ein Fahrgestell 501 mit einer Antriebseinheit und eine auf dem Fahrgestell 501 angeordnete Ladeplattform 502 zur Aufnahme, Abgabe und zum Transport einer Ware 405a..405i (in der Fig. 5 nicht dargestellt) oder eines ersten Anliefer-Ladehilfsmittels 406a..406d, Warenlager-Ladehilfsmittels 411a, 411b oder Ziel-Ladehilfsmittels 417 (in der Fig. 5 ebenfalls nicht dargestellt). Denkbar wäre auch, dass das autonome Flurförderfahrzeug 418 zusätzlich oder alternativ eine Hängestange umfasst, mit der Hängetaschen 408a..408d transportiert werden können.

Die Antriebseinheit umfasst an dem Fahrgestell 501 drehbar gelagerte Räder 503, 504, wovon zumindest eines der Räder 503 mit einem (nicht dargestellten) Antrieb gekuppelt ist, und zumindest eines der Räder 504 lenkbar ist. Es können auch beide Räder 503, 504 mit dem Antrieb gekuppelt und durch diesen angetrieben werden. Das autonome Flurförderfahrzeug 418 kann aber auch vier Räder umfassen, wovon zwei Räder lenkbar sind. Nach gezeigter Ausführung ist die Ladeplattform 502 zwischen einer (in festen Linien eingetragenen) Ausgangsstellung und einer (in strichlierte Linien eingetragenen) Transportstellung verstellbar am Fahrgestell 501 gelagert.

In der Ausgangsstellung kann eine Ware 405a..405i oder ein Anliefer-Ladehilfsmittel 406a..406d, Warenlager-Ladehilfsmittel 411a, 411b oder Ziel-Ladehilfsmittel 417 unterfahren werden, um diese/dieses aufzunehmen. Wird die Ladeplattform 502 aus der Ausgangsstellung in Richtung der Transportstellung verstellt, kann die Ware 405a..405i oder das Anliefer-Ladehilfsmittel 406a..406d, Warenlager-Ladehilfsmittel 411a, 411b oder Ziel-Ladehilfsmittel 417 angehoben und danach transportiert werden. Wird die Ladeplattform 502 aus der Transportstellung wieder in Richtung der Ausgangsstellung verstellt, kann Ware 405a..405i oder das Anliefer-Ladehilfsmittel 406a..406d, Warenlager-Ladehilfsmittel 411a, 411b oder Ziel-Ladehilfsmittel 417 wieder abgestellt oder abgegeben werden.

Das autonome Flurförderfahrzeug 418 umfasst ferner eine schematisch in strichlierte Linien dargestellte Fahrsteuerung 505 zum Empfang von Befehlen von einem übergeordneten Leitrechner und zum Steuern/Regeln der Bewegungen des autonomen Flurförderfahrzeugs 418. Die Fahrsteuerung 505 kann auch Mittel zur (drahtlosen) Datenübertragung an das und von dem autonomen Flurförderfahrzeug 418 umfassen. Schließlich umfasst das autonome Flurförderfahrzeug 418 nicht dargestellte Sensoren zum Erfassen der Umgebung des autonomen Flurförderfahrzeugs 418 und zur Orientierung im Raum. Der Antrieb der Antriebseinheit und die Sensoren sind mit der Fahrsteuerung 505 verbunden.

In den vorangehenden Beispielen ist das Warenlager 105 konkret als Liegewaren-Warenlager ausgebildet, die Waren 405a..405i sind konkret Liegewaren, und die Warenlager-Ladehilfsmittel 411a, 411b sind konkret als Warenlager-Liegewaren-Ladehilfsmittel ausgebildet. Dies ist aber nicht die einzig vorstellbare Möglichkeit, wie dies am folgenden Beispiel illustriert wird.

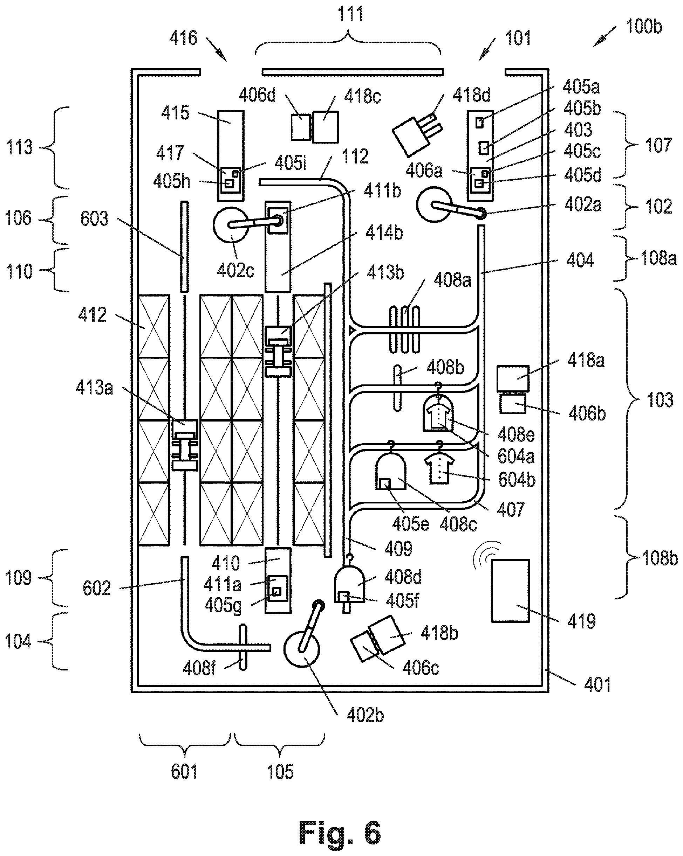

Fig. 6 zeigt dazu ein Lager- und Kommissioniersystem 100b, das ähnlich wie das in Fig. 4 dargestellte Lager- und Kommissioniersystem 100a ausgebildet ist. Im Unterschied dazu, umfasst das Lager- und Kommissioniersystem 100b jedoch ein Hängewaren-Warenlager 601 zusätzlich zum Liegewaren-Warenlager 105. Darüber hinaus umfasst die Einlager-Fördertechnik 109 eine Hängeförderbahn 602 der Einlager-Fördertechnik 109, welche die zweite Beladestation 104 mit dem Hängewaren-Warenlager 601 verbindet, und die Auslager-Fördertechnik 110 umfasst eine Hängeförderbahn 603 der Auslager-Fördertechnik 110, welche das Hängewaren-Warenlager 601 mit der Kommissionierstation 106 verbindet. Demgemäß führt der Förderer 410 der Einlager-Fördertechnik 109 nur zum rechten Teil des Lagers, nämlich zum Liegewaren-Warenlager 105, und der Förderer 414a der Auslager-Fördertechnik 106 entfällt.

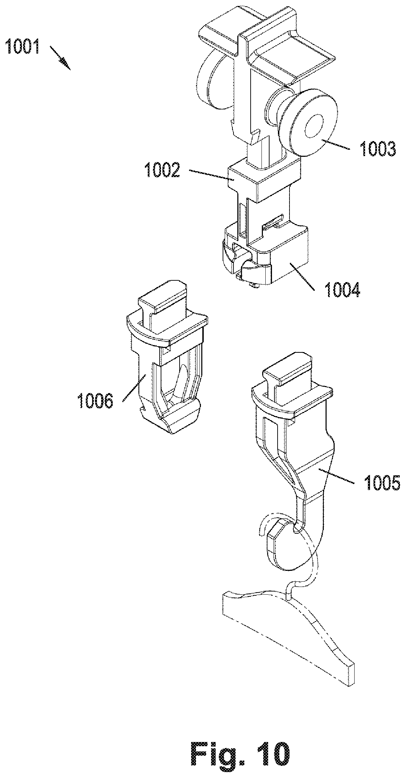

In der Fig. 6 ist zudem eine weitere Hängetasche 408e im Bereich der Hängetaschen-Sortiereinrichtung 103 dargestellt und noch eine weitere Hängetasche 408f im Bereich der Hängeförderbahn 602 der Einlager-Fördertechnik 109. An einem Haken an der Hängetasche 408e hängt eine Hängeware 604a. Die Ausführung von Hängetasche 408e kann also auch Hängeware transportieren. Die Hängeware 604a hängt entweder innerhalb eines Aufbewahrungsraumes der Hängetasche 408e aufgenommen oder die Hängeware 604a hängt außerhalb des Aufbewahrungsraumes der Hängetasche 408e. Schließlich befindet sich im Bereich der Hängetaschen-Sortiereinrichtung 103 eine weitere Hängeware 604b, die an einem nicht dargestellten Hängewaren-Transportträger aufgehängt ist (siehe in diesem Zusammenhang jedoch die Fig. 10).

Die Funktion des in der Fig. 6 dargestellten Lager- und Kommissioniersystem 100b ist nun wie folgt:
In einem Schritt a'), welcher dem Schritt a) oder 201 sehr ähnlich ist, werden zusätzlich zu den Liegewaren 405a..405i Hängewaren 604a, 604b am Wareneingang 101 des Lager- und Kommissioniersystems 100b bereitgestellt. Dabei kann es sich um verschiedene Hängewaren 604a, 604b handeln.

In einem Schritt b'), welcher dem Schritt b) oder 203 sehr ähnlich ist, werden die bereitgestellten Hängewaren 604a, 604b an der ersten Beladestation 102 artikelrein in oder auf Hängetaschen 408a..408f und/oder auf Hängewaren-Transportträger geladen. Dabei wird eine Warentype der in/auf die Hängetasche 408a..408f und/oder auf den Hängewaren-Transportträger geladenen Hängeware 604a, 604b erfasst. Die Wareneingangs-Fördertechnik 107 wird für den Schritt b') im Grunde nicht benötigt, die Wareneingangs-Fördertechnik 107 kann aber auch eine vom Wareneingang 101 zur ersten Beladestation 102 führende Hängeförderbahn umfassen.

In einem Schritt c'), welcher dem Schritt c) oder 204 sehr ähnlich ist, werden die beladenen Hängetaschen 408a..408f und/oder die beladenen Hängewaren-Transportträger mit Hilfe der Hängetaschen-Fördertechnik 108a in die Hängetaschen-Sortiereinrichtung 103 transportiert.

In einem Schritt d'), welcher dem Schritt d) oder 205 sehr ähnlich ist, werden in der Hängetaschen-Sortiereinrichtung 103 Gruppen von Hängetaschen 408a..408f und/oder Hängewaren-Transportträgern basierend auf der Waren-Gruppier-Vorschrift gebildet, welche einer Gruppe jeweils eine oder mehrere vorgebbare Warentypen zuweist.

In einem Schritt e'), welcher dem Schritt e) oder 208 sehr ähnlich ist, werden die Gruppen von Hängetaschen 408a..408f und/oder die Gruppen von Hängewaren-Transportträgern mit Hilfe der Hängetaschen-Fördertechnik 108b zur zweiten Beladestation 104 transportiert.

In einem Schritt f), welcher dem Schritt f) oder 301 sehr ähnlich ist, wird die in/auf die Hängetasche 408a..408f und/oder auf den Hängewaren-Transportträger geladenen Hängeware 604a, 604b einer Gruppe von den Hängetaschen 408a..408f und/oder einer Gruppe von Hängewaren-Transportträgern an der zweiten Beladestation 104 in/auf ein Warenlager-Hängewaren-Ladehilfsmittel 411a, 411b geladen. Das Warenlager-Hängewaren-Ladehilfsmittel 411a, 411b kann eine Hängestange umfassen, auf welcher gleichzeitig mehrere Hängewaren hängend transportiert werden. In Folge wird das Warenlager-Hängewaren-Ladehilfsmittel 411a, 411b mit Hilfe der Einlager-Fördertechnik 109 in das Hängewaren-Warenlager 601 des Lager- und Kommissioniersystems 100b transportiert und dort eingelagert.

Das Einlagern der Warenlager-Hängewaren-Ladehilfsmittel 411a, 411b in ein Hängewaren-Warenlager 601 kann unterschiedliche Teilschritte umfassen:
i) Transport der Warenlager-Hängewaren-Ladehilfsmittel 411a, 411b von der zweiten Beladestation 104 zu einer Hängewaren-Ladehilfsmittel-Bereitstellstation, Bereitstellung des Warenlager-Hängewaren-Ladehilfsmittel 411a, 411b an der Bereitstellstation, Übernahme der Hängewaren 604a, 604b vom Warenlager-Hängewaren-Ladehilfsmittel 411a, 411b auf ein Regalbediengerät (wie nachfolgend beschrieben), Transport der Hängewaren 604a, 604b von der Bereitstellstation zu einem Lagerbereich des Hängewaren-Warenlagers 601, Positionierung des Regalbediengeräts vor einer der Lager-Hängebahnen (wie nachfolgend beschrieben) im Lagerbereich und Verlagerung der Hängewaren 604a, 604b vom Regalbediengerät auf die Lager-Hängebahn;
ii) Transport der Warenlager-Hängewaren-Ladehilfsmittel 411a, 411b von der zweiten Beladestation 104 direkt in einen Lagerbereich des Hängewaren-Warenlagers 601 und Lagerung des Warenlager-Hängewaren-Ladehilfsmittels 411a, 411b im Lagerbereich.

Das Umladen und Einlagern erfolgt dabei ohne Bezug zu einem Kommissionierauftrag.

In einem Schritt g'), welcher dem Schritt g) oder 303 sehr ähnlich ist, werden Kommissionieraufträge zum Kommissionieren von Auftrags-Hängewaren 604a, 604b erfasst.

In einem weiteren Schritt h'), welcher dem Schritt h) oder 305 sehr ähnlich ist, wird schließlich der Kommissionierauftrag bearbeitet. Dieser umfasst die Schritte
- Auslagern eines Warenlager-Hängewaren-Ladehilfsmittels 408a..408f, welches zumindest eine dem Kommissionierauftrag zugeordnete Auftrags-Hängeware 604a, 604b enthält, aus dem Hängewaren-Warenlager 601 mit Hilfe der Auslager-Fördertechnik 110 und
- Beladen eines Ziel-Ladehilfsmittels 417 mit der zumindest einen Auftrags-Hängeware 604a, 604b an einer Kommissionierstation 106.

Das Auslagern der Warenlager-Hängewaren-Ladehilfsmittel 411a, 411b aus einem Hängewaren-Warenlager 601 zu einem Kommissionierauftrag kann unterschiedliche Teilschritte umfassen:
i) Verlagerung der Hängewaren 604a, 604b von der entsprechenden Lager-Hängebahn auf das Regalbediengerät, Transport der Hängewaren 604a, 604b zu einer Hängewaren-Ladehilfsmittel-Bereitstellstation, Bereitstellung eines leeren Warenlager-Hängewaren-Ladehilfsmittel 411a, 411b an der Bereitstellstation, Übergabe der zu einem Kommissionierauftrag benötigten Hängewaren 604a, 604b vom Regalbediengerät auf das leere Warenlager-Hängewaren-Ladehilfsmittel 411a, 411b, Transport des Warenlager-Hängewaren-Ladehilfsmittels 411a, 411b mit der Auftrags-Hängeware 604a, 604b durch die Auslager-Fördertechnik 110 zur Kommissionierstation 106; oder
ii) Transport der Warenlager-Hängewaren-Ladehilfsmittel 411a, 411b mit der Auftrags-Hängeware 604a, 604b durch die Auslager-Fördertechnik 110 vom Lagerbereich des Hängewaren-Warenlagers 601 zur Kommissionierstation 106. Dabei kann das Warenlager-Hängewaren-Ladehilfsmittel 411a, 411b nur die zu einem Kommissionierauftrag benötigten Auftrags-Hängewaren 604a, 604b aufnehmen und folglich werden an der Kommissionierstation 106 sämtliche Auftrags-Hängewaren 604a, 604b entnommen. Oder es wird unabhängig von der benötigten Anzahl an Hängewaren das Warenlager-Hängewaren-Ladehilfsmittel 411a, 411b zur Kommissionierstation 106 transportiert, und es werden dort die zu einem Kommissionierauftrag benötigten Auftrags-Hängewaren 604a, 604b entnommen. Verbleibt Hängeware auf dem Warenlager-Hängewaren-Ladehilfsmittel 411a, 411b, so kann dieses wiederum zurück in den Lagerbereich transportiert werden.

Sinngemäß sind auch die erste Bypass-Verbindung 111 und die zweite Bypass-Verbindung 112 im Zusammenhang mit Hängeware 604a, 604b anwendbar.

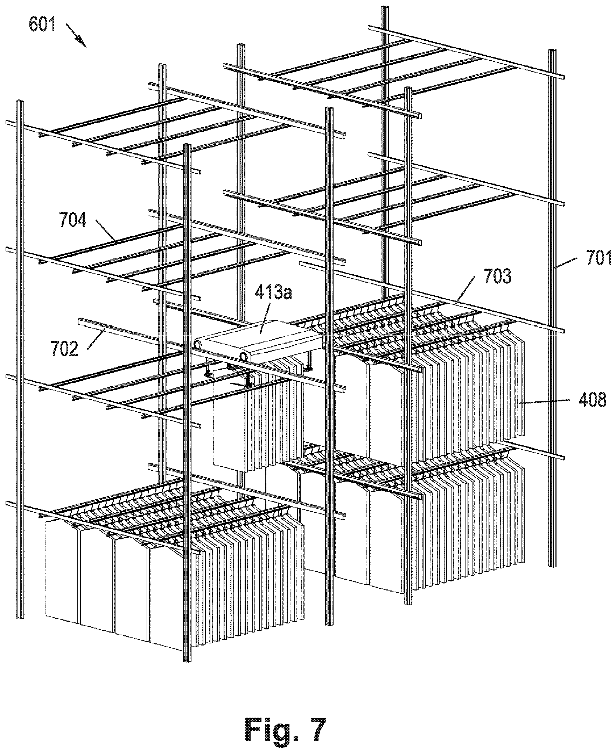

Fig. 7 zeigt nun ein beispielhaftes Hängewaren-Warenlager 601 in Schrägansicht. Ein solches automatisiertes Hängewaren-Warenlager 601 ist in der WO 2017/060301 A2 und WO 2018/201176 A2 beschrieben. Das Hängewaren-Warenlager 601 umfasst vordere Regalsteher 701, daran befestigte vordere Längstraversen 702, hintere Regalsteher 701, daran befestigte hintere Längstraversen 702 und eine Vielzahl an Hängestangen beziehungsweise Lager-Hängebahnen 704, die in übereinander liegenden Lagerebenen zwischen den vorderen Längstraversen 702 und den hinteren Längstraversen 703 verlaufen und an denen Hängetaschen 408 oder Hängewaren 604a, 604b hängen können. Zusätzlich kann das Hängewaren-Warenlager 601zumindest ein beispielhaft dargestelltes Regalbediengerät 413a umfassen. Ist das Regalbediengerät 413a ein Einebenenregalbediengerät können die vorderen Längstraversen 702 gleichzeitig als Fahrschienen für das zumindest eine Regalbediengerät 413a dienen. Die Einlager-Fördertechnik 109 umfasst nach dieser Ausführung auch das zumindest eine Regalbediengerät 413a.

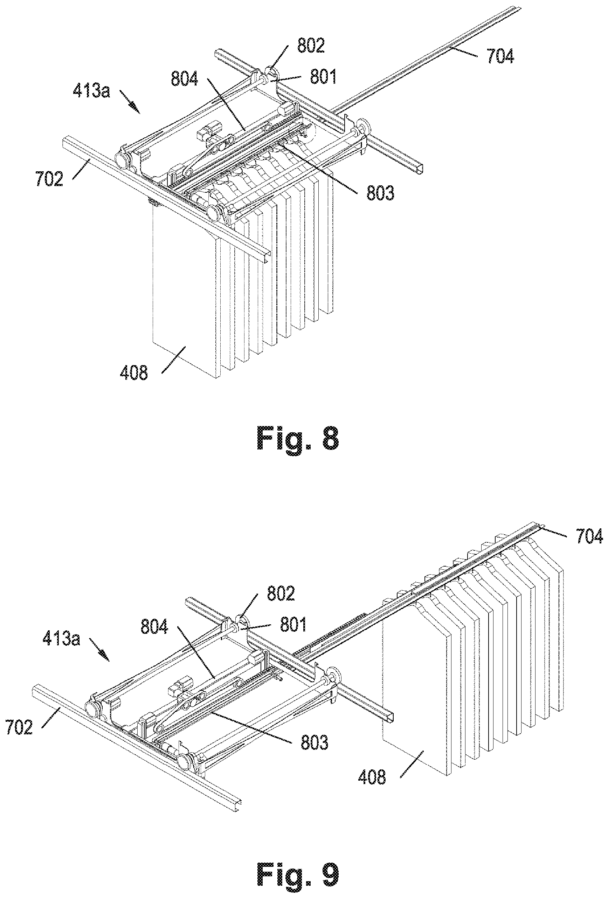

Die Figuren 8 und 9 zeigen nun eine Schrägansicht eines Regalbediengeräts 413a, das für die Manipulation von Hängetaschen 408 und/oder Hängewaren 604a, 604b ausgebildet ist. Das Regalbediengerät 413a umfasst ein Fahrgestell 801, mehrere daran drehbar gelagerte Räder 802, mit denen das Regalbediengerät 413a auf den Längstraversen/Fahrschienen 702 fährt, eine Hängestange 803 und eine Teleskopiereinheit 804, mit welcher die Hängetaschen 408 oder Hängewaren 604a, 604b von der Hängestange 803 des Regalbediengeräts 413a auf die Lager-Hängebahn 704 eingelagert oder von der Lager-Hängebahn 704 auf die Hängestange 803 des Regalbediengeräts 413a ausgelagert werden können. Die Teleskopiereinheit 804 dient dabei zum Verschieben der Hängetaschen 408 oder Hängewaren 604a, 604b auf der Hängestange 803 des Regalbediengeräts 413a und auf der Lager-Hängebahn 704. Die Fig. 8 zeigt das Regalbediengerät 413a in Fahrstellung, also mit eingezogener Teleskopiereinheit 804, und die Fig. 9 zeigt das Regalbediengeräts 413a in Ein-/Auslagerstellung also mit ausgefahrener Teleskopiereinheit 804.

Andererseits ist auch ein nicht dargestelltes automatisiertes Hängewaren-Warenlager möglich, wie es beispielsweise in der EP 1 972 577 beschrieben ist.

Auch wenn nach einer bevorzugten Ausführung das Hängewaren-Warenlager 601 als vollautomatisches Hängewaren-Warenlager gestaltet ist, wäre auch ein manuell betriebenes Hängewaren-Warenlager denkbar.

Die Fig. 10 zeigt schließlich einen beispielhaften Hängewaren-Transportträger 1001 in Schrägansicht. Der Hängewaren-Transportträger 1001 kann entlang der Hängeförderbahnen 404, 409 der Hängetaschen-Fördertechnik 108a, 108b, den Sortierbahnen 407 der Hängetaschen-Sortiereinrichtung 103, der Hängeförderbahn 602 der Einlager-Fördertechnik 108, der Hängeförderbahn 603 der Auslager-Fördertechnik 110, auf den Lager-Hängebahnen 704 und/oder auf der Hängestange 803 des Regalbediengeräts 413a angetrieben und/oder nicht angetrieben bewegt werden. Der Hängewaren-Transportträger 1001 kann einen Grundkörper 1002 und daran drehbar gelagert eine oder mehrere Laufrollen 1003 umfassen. Weiterhin kann der Hängewaren-Transportträger 1001 eine Adapteraufnahme 1004 umfassen, in die wahlweise ein erster Hängeadapter 1005 oder ein zweiter Hängeadapter 1006 eingeschoben werden kann. An dem ersten Hängeadapter 1005 kann eine Hängeware 604a, 604b über einen Kleiderbügel aufgehängt werden. Der zweite Hängeadapter 1006 ist für eine Hängetasche 408..408f vorgesehen, an welchem die Hängetasche 408..408f über einen Bügel aufgehängt werden kann. Grundsätzlich könnte aber auch an dem zweiten Hängeadapter 1006 eine Hängewaren 604a, 604b aufgehängt werden.

Der Hängewaren-Transportträger 1001 ist nicht auf die in der Fig. 10 dargestellte Bauform beschränkt, sondern könnte auch anders ausgebildet sein. Insbesondere kann der Hängewaren-Transportträger 1001 auch einteilig ausgebildet sein.

Abschließend wird festgehalten, dass der Schutzbereich durch die Patentansprüche bestimmt ist. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

### Bezugszeichenaufstellung

- 100a, 100b: Lager- und Kommissioniersystem
- 101: Wareneingang
- 102: erste Beladestation
- 103: Hängetaschen-Sortiereinrichtung
- 104: zweiten Beladestation
- 105: Warenlager (Liegewaren-Warenlager)

- 106: Kommissionierstation
- 107: Wareneingangs-Fördertechnik
- 108a, 108b: Hängetaschen-Fördertechnik
- 109: Einlager-Fördertechnik
- 110: Auslager-Fördertechnik

- 111: erste Bypass-Verbindung
- 112: zweite Bypass-Verbindung
- 113: Warenausgangs-Fördertechnik

- 401: Gebäude
- 402a..402c: Roboter
- 403: Förderer der Wareneingangs-Fördertechnik
- 404: Hängeförderbahn der Hängetaschen-Fördertechnik
- 405a..405i: Waren (Liegewaren)

- 406a..406d: Anliefer-Ladehilfsmittel
- 407: Sortierbahn
- 408..408f: Hängetasche
- 409: Hängeförderbahn der Hängetaschen-Fördertechnik
- 410: Förderer der Einlager-Fördertechnik
- 411a, 411b: Warenlager-(Liegewaren)-Ladehilfsmittel
- 412: Lagerregale
- 413a, 413b: Regalbediengerät
- 414a, 414b: Förderer der Auslager-Fördertechnik
- 415: Förderer der Warenausgangs-Fördertechnik

- 416: Warenausgang
- 417: Ziel-Ladehilfsmittel
- 418..418d: autonomes Flurförderfahrzeug
- 419: Steuersystem

- 501: Fahrgestell
- 502: Ladeplattform
- 503: Rad (angetrieben)
- 504: Rad (lenkbar)
- 505: Fahrsteuerung

- 601: Hängewaren -Warenlager
- 602: Hängeförderbahn der Einlager-Fördertechnik
- 603: Hängeförderbahn der Auslager-Fördertechnik
- 604a, 604b: Hängeware

- 701: Regalsteher
- 702: vordere Längstraverse (Fahrschiene)
- 703: hintere Längstraverse
- 704: Hängestange, Lager-Hängebahn

- 801: Fahrgestell
- 802: Rad
- 803: Hängestange
- 804: Teleskopiereinheit

- 1001: Hängewaren-Transportträger
- 1002: Grundkörper
- 1003: Laufrolle
- 1004: Adapteraufnahme
- 1005: erster Hängeadapter
- 1006: zweiter Hängeadapter

## Patentansprüche

1. Verfahren zum Betrieb eines Lager- und Kommissioniersystems (100a, 100b), umfassend die Schritte
a) Bereitstellen gemischter Ware (405a..405i, 604a, 604b) an einem Wareneingang (101) des Lager- und Kommissioniersystems (100a, 100b), wobei die Ware (405a..405i, 604a, 604b) Liegeware (405a..405i) umfasst,
b) artikelreines Beladen von Hängetaschen (408..408f) mit der bereitgestellten Liegeware (405a..405i) an einer ersten Beladestation (102) und Erfassen einer Warentype der in die Hängetasche (408..408f) geladenen Liegeware (405a..405i),
c) Transport der beladenen Hängetaschen (408..408f) in eine Hängetaschen-Sortiereinrichtung (103) mit Hilfe einer Hängetaschen-Fördertechnik (108a, 108b),
d) Bilden von Gruppen von Hängetaschen (408..408f) in der Hängetaschen-Sortiereinrichtung (103) basierend auf einer Waren-Gruppier-Vorschrift, welche einer Gruppe jeweils eine oder mehrere vorgebbare Warentypen zuweist,
e) Transport der Gruppen von Hängetaschen (408..408f) zu einer zweiten Beladestation (104) mit Hilfe der Hängetaschen-Fördertechnik (108a, 108b),
**gekennzeichnet durch** die folgenden Schritte:
f) Umladen der in den Hängetaschen (408..408f) artikelrein enthaltenen Liegeware (405a..405i) einer Gruppe von den Hängetaschen (408..408f) in ein Warenlager-Liegewaren-Ladehilfsmittel (411a, 411b), das von Warenlager-Ladehilfsmitteln (411a, 411b, 602, 803) umfasst ist, an der zweiten Beladestation (104) und Einlagern des Warenlager-Liegewaren-Ladehilfsmittels (411a, 411b) in ein Liegewaren-Warenlager (105), das von einem Warenlager (105, 601) des Lager- und Kommissioniersystems (100a, 100b) umfasst ist, mit Hilfe einer Einlager-Fördertechnik (109), wobei das Umladen und Einlagern ohne Bezug zu einem Kommissionierauftrag erfolgt und wobei das Warenlager-Liegewaren-Ladehilfsmittel (411a, 411b) unterschiedlich zu einer Hängetasche (408..408f) ausgebildet ist,
g) Erfassen von Kommissionieraufträgen zum Kommissionieren von Auftrags-Liegewaren, welche von Auftragswaren (405a..405i) umfasst sind,
h) Bearbeitung eines Kommissionierauftrags umfassend die Schritte
- Auslagern eines Warenlager-Liegewaren-Ladehilfsmittels (411a, 411b), welches zumindest eine dem Kommissionierauftrag zugeordnete Auftrags-Liegeware (405a..405i) enthält, aus dem Liegewaren-Warenlager (105) mit Hilfe einer Auslager-Fördertechnik (110) und
- Beladen eines Ziel-Ladehilfsmittels (417) mit der zumindest einen Auftrags-Liegeware (405a..405i) an einer Kommissionierstation (106).

2. Verfahren nach Anspruch 1, zusätzlich umfassend die Schritte
a') Bereitstellen gemischter Ware (405a..405i, 604a, 604b) am Wareneingang (101) des Lager- und Kommissioniersystems (100a, 100b), wobei die Ware (405a..405i) auch gemischte Hängeware (604a, 604b) umfasst,
b') artikelreines Beladen von Hängetaschen (408..408f) und/oder von Hängewaren-Transportträgern (1001) mit der bereitgestellten Hängeware (604a, 604b) an der ersten Beladestation (102) und Erfassen einer Warentype der in/auf die Hängetasche (408..408f) und/oder auf den Hängewaren-Transportträger (1001) geladenen Hängeware (604a, 604b),
c') Transport der beladenen Hängetaschen (408..408f) und/oder der beladenen Hängewaren-Transportträger (1001) in die Hängetaschen-Sortiereinrichtung (103) mit Hilfe der Hängetaschen-Fördertechnik (108a, 108b),
d') Bilden von Gruppen von Hängetaschen (408..408f) und/oder Hängewaren-Transportträgern (1001) in der Hängetaschen-Sortiereinrichtung (103) basierend auf der Waren-Gruppier-Vorschrift, welche einer Gruppe jeweils eine oder mehrere vorgebbare Warentypen zuweist,
e') Transport der Gruppen von Hängetaschen (408..408f) und/oder der Gruppen von Hängewaren-Transportträgern (1001) zur zweiten Beladestation (104) mit Hilfe der Hängetaschen-Fördertechnik (108a, 108b),
f) Umladen der in/auf die Hängetasche (408..408f) und/oder auf den Hängewaren-Transportträger (1001) geladenen Hängeware (604a, 604b) einer Gruppe von Hängetaschen (408..408f) und/oder Hängewaren-Transportträgern (1001) in/auf ein Warenlager-Hängewaren-Ladehilfsmittel (602, 803), das von den Warenlager-Ladehilfsmitteln (411a, 411b, 602, 803) umfasst ist, an der zweiten Beladestation (104) und Einlagern des Warenlager-Hängewaren-Ladehilfsmittels (602, 803) in das Hängewaren-Warenlager (601), das vom Warenlager (105, 601) des Lager- und Kommissioniersystems (100a, 100b) umfasst ist, mit Hilfe der Einlager-Fördertechnik (109), wobei das Umladen und Einlagern ohne Bezug zu einem Kommissionierauftrag erfolgt, und wobei das Warenlager-Hängewaren-Ladehilfsmittel (602, 803) insbesondere eine Hängestange umfasst,
g') Erfassen von Kommissionieraufträgen zum Kommissionieren von Auftrags-Hängewaren (604a, 604b), welche von den Auftragswaren (405a..405i) umfasst sind,
h') Bearbeitung eines Kommissionierauftrags umfassend die Schritte
- Auslagern eines Warenlager-Hängewaren-Ladehilfsmittels (602, 803), welches zumindest eine dem Kommissionierauftrag zugeordnete Auftrags-Hängeware (604a, 604b) enthält, aus dem Hängewaren-Warenlager (601) mit Hilfe der Auslager-Fördertechnik (110) und
- Beladen eines Ziel-Ladehilfsmittels (417) mit der zumindest einen Auftrags-Hängeware (604a, 604b) an einer Kommissionierstation (106).

3. Verfahren nach Anspruch 1 oder 2, **dadurch gekennzeichnet, dass** die Schritte e) und f) ausgeführt werden, wenn die Anzahl der Hängetaschen (408..408f) einer Gruppe einen Hängetaschen-Gruppengrößen-Schwellwert (SW2) oder die Anzahl der Waren (405a..405i) in den Hängetaschen (408..408f) einer Gruppe einen Waren-Gruppengrößen-Schwellwert erreicht.

4. Verfahren nach einem der Ansprüche 1 bis 3, **dadurch gekennzeichnet, dass** die Schritte e) und f) ausgeführt werden, wenn die Verweilzeit von Hängetaschen (408..408f) oder Waren (405a..405i) in der Hängetaschen-Sortiereinrichtung (103) einen Verweilzeit-Schwellwert (SW1) erreicht.

5. Verfahren nach einem der Ansprüche 1 bis 4, **dadurch gekennzeichnet, dass** ausschließlich Retourware (405a..405i) in die Hängetaschen (408..408f) geladen und nach den Schritten b) bis h) behandelt werden.

6. Verfahren nach einem der Ansprüche 1 bis 5, **dadurch gekennzeichnet, dass** der Schritt a) auch das Bereitstellen von Ware (405a..405i) am Wareneingang (101) des Lager- und Kommissioniersystems (100a, 100b) umfasst, welche mit Hilfe eines Anliefer-Ladehilfsmittels (406a..406d) artikelrein bereitgestellt wird, und ein Einlagern dieser Ware (405a..405i) in das Warenlager (105, 601) unter Umgehung der Schritte b) bis f) und ohne Bezug zu einem Kommissionierauftrag erfolgt, wobei
- das genannte Anliefer-Ladehilfsmittel (406a..406d) direkt in das Warenlager (105, 601) eingelagert wird oder
- die genannte Ware (405a..405i) an der zweiten Beladestation (104) oder an einer dritten Beladestation vom Anliefer- Ladehilfsmittel (406a..406d) in ein Warenlager-Ladehilfsmittel (411a, 411b, 602, 803) umgeladen wird, und das beladene Warenlager-Ladehilfsmittel (411a, 411b, 602, 803) in das Warenlager (105, 601) eingelagert wird.

7. Verfahren nach einem der Ansprüche 1 bis 6, **dadurch gekennzeichnet, dass** im Schritt b) in jede Hängetasche (408..408f) eine einzige Ware (405a..405i) geladen wird.

8. Verfahren nach einem der Ansprüche 1 bis 7, **dadurch gekennzeichnet, dass** der Gruppe durch die Waren-Gruppier-Vorschrift genau eine vorgebbare Warentype zugewiesen wird und die Gruppen von Hängetaschen (408..408f) mit Waren (405a..405i) der gleichen Warentype gebildet werden.

9. Verfahren nach einem der Ansprüche 1 bis 7, **dadurch gekennzeichnet, dass** der Gruppe durch die Waren-Gruppier-Vorschrift mehrere vorgebbare Warentypen zugewiesen werden und die Gruppen von Hängetaschen (408..408f) mit Waren (405a..405i) unterschiedlicher Warentype gebildet werden, wobei
- ein Volumen einer ersten Ware (405a..405i) einer ersten Warentype zumindest zweimal so groß ist wie ein Volumen einer zweiten Ware (405a..405i) einer zweiten Warentype und/oder
- ein Gewicht einer ersten Ware (405a..405i) einer ersten Warentype zumindest zweimal so groß ist wie ein Gewicht einer zweiten Ware (405a..405i) einer zweiten Warentype und/oder
- eine längste Abmessung einer ersten Ware (405a..405i) einer ersten Warentype zumindest zweimal so groß ist wie eine längste Abmessung einer zweiten Ware (405a..405i) einer zweiten Warentype und/oder
- ein optischer Reflexionsgrad einer ersten Ware (405a..405i) einer ersten Warentype zumindest zweimal so groß ist wie ein optischer Reflexionsgrad einer zweiten Ware (405a..405i) einer zweiten Warentype und/oder
- eine Farbe einer ersten Ware (405a..405i) einer ersten Warentype in einem Farbkreis einen Abstand von zumindest 30° zu einer Farbe einer zweiten Ware (405a..405i) einer zweiten Warentype aufweist.

10. Verfahren nach Anspruch 9, **dadurch gekennzeichnet, dass** die Hängetaschen (408..408f) einer Gruppe nach dem Schritt d) in Bezug auf die Warentype der in ihnen enthaltenen Waren (405a..405i) innerhalb der Gruppe sortiert in Blöcken vorliegen.

11. Verfahren nach Anspruch 9, **dadurch gekennzeichnet, dass** die Hängetaschen (408..408f) einer Gruppe nach dem Schritt d) in Bezug auf die Warentype der in ihnen enthaltenen Waren (405a..405i) innerhalb der Gruppe chaotisch verteilt sind.

12. Verfahren nach einem der Ansprüche 1 bis 11, **dadurch gekennzeichnet, dass** die Warenlager-Ladehilfsmittel (411a, 411b, 602, 803) im Schritt f) an der zweiten Beladestation (104) artikelrein mit Waren (405a..405i) einer Warentype beladen werden.

13. Verfahren nach einem der Ansprüche 1 bis 11, **dadurch gekennzeichnet, dass** die Warenlager-Ladehilfsmittel (411a, 411b, 602, 803) im Schritt f) an der zweiten Beladestation (104) mit Waren (405a..405i) unterschiedlicher Warentype beladen werden, wobei
- ein Volumen einer ersten Ware (405a..405i) einer ersten Warentype zumindest zweimal so groß ist wie ein Volumen einer zweiten Ware (405a..405i) einer zweiten Warentype und/oder
- ein Gewicht einer ersten Ware (405a..405i) einer ersten Warentype zumindest zweimal so groß ist wie ein Gewicht einer zweiten Ware (405a..405i) einer zweiten Warentype und/oder
- eine längste Abmessung einer ersten Ware (405a..405i) einer ersten Warentype zumindest zweimal so groß ist wie eine längste Abmessung einer zweiten Ware (405a..405i) einer zweiten Warentype und/oder
- ein optischer Reflexionsgrad einer ersten Ware (405a..405i) einer ersten Warentype zumindest zweimal so groß ist wie ein optischer Reflexionsgrad einer zweiten Ware (405a..405i) einer zweiten Warentype und/oder
- eine Farbe einer ersten Ware (405a..405i) einer ersten Warentype in einem Farbkreis einen Abstand von zumindest 30° zu einer Farbe einer zweiten Ware (405a..405i) einer zweiten Warentype aufweist.

14. Verfahren nach einem der Ansprüche 1 bis 13, **dadurch gekennzeichnet, dass** im Schritt g) geprüft wird, ob eine zu kommissionierende Auftragsware (405a..405i) in der Hängetaschen-Sortiereinrichtung (103) vorrätig ist und bei positivem Ausgang der Prüfung statt dem Schritt h) für die Bearbeitung eines Kommissionierauftrags
- eine Hängetasche (408..408f), welche zumindest eine dem Kommissionierauftrag zugeordnete Auftragsware (405a..405i) enthält, mit Hilfe einer Hängetaschen-Fördertechnik (108a, 108b) aus der Hängetaschen-Sortiereinrichtung (103) ausgelagert wird und
- ein Ziel-Ladehilfsmittel (417) an einer Kommissionierstation (106) mit der zumindest einen Auftragsware (405a..405i) beladen wird.

15. Lager- und Kommissioniersystem (100a, 100b), umfassend
- einen Wareneingang (101) für die Bereitstellung gemischter Ware (405a..405i, 604a, 604b), wobei die Ware (405a..405i, 604a, 604b) Liegeware (405a..405i) umfasst,
- ein dem Wareneingang (101) fördertechnisch nachgelagertes Liegewaren-Warenlager (105), das von einem Warenlager (105, 601) des Lager- und Kommissioniersystems (100a, 100b) umfasst ist,
- eine dem Liegewaren-Warenlager (105) fördertechnisch nachgelagerte Kommissionierstation (106), welche über eine Auslager-Fördertechnik (110) fördertechnisch mit dem Liegewaren-Warenlager (105) verbunden ist,
- eine erste Beladestation (102), welche für die artikelreine Beladung von Hängetaschen (408..408f) mit der bereitgestellten Liegeware (405a..405i) ausgebildet ist,
- eine der ersten Beladestation (102) fördertechnisch nachgelagerte Hängetaschen-Sortiereinrichtung (103) für die Hängetaschen (408..408f), welche über eine Hängetaschen-Fördertechnik (108a, 108b) fördertechnisch mit der ersten Beladestation (102) verbunden ist, und
- ein Steuersystem (419), welches dazu eingerichtet ist,
i) eine Warentype einer in eine Hängetasche (408..408f) geladenen Liegeware (405a..405i) zu erfassen und
ii) die Hängetaschen-Sortiereinrichtung (103) zur Bildung von Gruppen von Hängetaschen (408..408f) basierend auf einer Waren-Gruppier-Vorschrift, welche einer Gruppe jeweils eine oder mehrere vorgebbare Warentypen zuweist, anzusteuern, **gekennzeichnet durch**
- eine zweite Beladestation (104), welche der Hängetaschen-Sortiereinrichtung (103) fördertechnisch nachgelagert und dem Liegewaren-Warenlager (105) fördertechnisch vorgelagert ist, welche über die Hängetaschen-Fördertechnik (108a, 108b) fördertechnisch mit der Hängetaschen-Sortiereinrichtung (103) verbunden ist, welche über eine Einlager-Fördertechnik (109) fördertechnisch mit dem Liegewaren-Warenlager (105) verbunden ist und welche für das Umladen der in den Hängetaschen (408..408f) artikelrein enthaltenen Liegeware (405a..405i) von den Hängetaschen (408..408f) in ein Warenlager-Liegewaren-Ladehilfsmittel (411a, 411b) ausgebildet ist, wobei das Warenlager-Liegewaren-Ladehilfsmittel (411a, 411b) von Warenlager-Ladehilfsmitteln (411a, 411b, 602, 803) umfasst ist und unterschiedlich zu einer Hängetasche (408..408f) ausgebildet ist, und
- das Steuersystem (419), welches auch dazu eingerichtet ist,
iii) die Hängetaschen-Fördertechnik (108a, 108b) für einen Transport der Gruppen von Hängetaschen (408..408f) zu einer zweiten Beladestation (104) anzusteuern und
iv) das Umladen der in den Hängetaschen (408..408f) enthaltenen Liegeware (405a..405i) von den Hängetaschen (408..408f) einer Gruppe von Hängetaschen (408..408f) in das Warenlager-Liegewaren-Ladehilfsmittel (411a, 411b) und das Einlagern der Warenlager-Liegewaren-Ladehilfsmittel (411a, 411b) in das Liegewaren-Warenlager (105) mit Hilfe der Einlager-Fördertechnik (109) ohne Bezug zu einem Kommissionierauftrag auszulösen und
v) Kommissionieraufträge zum Kommissionieren von Auftrags-Liegewaren (405a..405i), welche von Auftragswaren (405a..405i) umfasst sind, zu erfassen und
vi) einen Kommissionierauftrag zu bearbeiten, indem das Steuersystem (419) auch dazu eingerichtet ist,
- das Auslagern eines Warenlager-Liegewaren-Ladehilfsmittels (411a, 411b), welches zumindest eine dem Kommissionierauftrag zugeordnete Auftrags-Liegeware (405a..405i) enthält, aus dem Liegewaren-Warenlager (105) mit Hilfe der Auslager-Fördertechnik (110) auszulösen und
- das Beladen eines Ziel-Ladehilfsmittels (417) mit der zumindest einen Auftrags-Liegeware (405a..405i) an einer Kommissionierstation (106) anzusteuern.

16. Lager- und Kommissioniersystem (100a, 100b) nach Anspruch 15, **dadurch gekennzeichnet, dass**
- der Wareneingang (101) für die Bereitstellung gemischter Ware (405a..405i, 604a, 604b) ausgebildet ist, welche auch Hängeware (604a, 604b) umfasst,
- ein dem Wareneingang (101) fördertechnisch nachgelagertes Hängewaren-Warenlager (601) vorgesehen ist, das vom Warenlager (105, 601) des Lager- und Kommissioniersystems (100a, 100b) umfasst ist,
- die Kommissionierstation (106) dem Hängewaren-Warenlager (601) fördertechnisch nachgelagert ist und über eine Auslager-Fördertechnik (110) fördertechnisch mit dem Hängewaren-Warenlager (601) verbunden ist,
- die erste Beladestation (102) für die artikelreine Beladung von Hängetaschen (408..408f) und/oder von Hängewaren-Transportträgern (1001) mit der bereitgestellten Hängeware (405a..405i) ausgebildet ist,
- die Hängetaschen-Sortiereinrichtung (103) auch für den Transport von Hängewaren-Transportträgern (1001) ausgebildet ist,
- die zweite Beladestation (104) dem Hängewaren-Warenlager (601) fördertechnisch vorgelagert ist und über die Einlager-Fördertechnik (109) fördertechnisch mit dem Hängewaren-Warenlager (601) verbunden ist und dass die zweite Beladestation (104) auch für das Umladen der in den Hängetaschen (408..408f) und/oder auf den Hängewaren-Transportträgern (1001) artikelrein geladenen Hängeware (604a, 604b) von den Hängetaschen (408..408f) und/oder den Hängewaren-Transportträgern (1001) in/auf ein Warenlager-Hängewaren-Ladehilfsmittel (602, 803) ausgebildet ist, wobei das Warenlager-Hängewaren-Ladehilfsmittel (602, 803) von Warenlager-Ladehilfsmitteln (411a, 411b, 602, 803) umfasst ist und insbesondere eine Hängestange umfasst, und
- das Steuersystem (419) auch dazu eingerichtet ist,
i) eine Warentype einer in/auf die Hängetasche (408..408f) und/oder auf den Hängewaren-Transportträger (1001) geladenen Hängeware (604a, 604b) zu erfassen und
ii) die Hängetaschen-Sortiereinrichtung (103) zur Bildung von Gruppen von Hängetaschen (408..408f) und/oder Hängewaren-Transportträgern (1001) basierend auf einer Waren-Gruppier-Vorschrift, welche einer Gruppe jeweils eine oder mehrere vorgebbare Warentypen zuweist, anzusteuern und
iii) die Hängetaschen-Fördertechnik (108a, 108b) für einen Transport der Gruppen von Hängetaschen (408..408f) und/oder Hängewaren-Transportträgern (1001) zu einer zweiten Beladestation (104) anzusteuern und
iv) das Umladen der in/auf den Hängetaschen (408..408f) und/oder auf den Hängewaren-Transportträgem (1001) geladenen Hängeware (604a, 604b) von den Hängetaschen (408..408f) und/oder von den Hängewaren-Transportträgern (1001) einer Gruppe von Hängetaschen (408..408f) und/oder Hängewaren-Transportträgern (1001) in/auf ein Warenlager-Hängewaren-Ladehilfsmittel (602, 803) auszulösen und das Einlagern des Warenlager-Hängewaren-Ladehilfsmittels (602, 803) in das Hängewaren-Warenlager (601) mit Hilfe der Einlager-Fördertechnik (109) ohne Bezug zu einem Kommissionierauftrag auszulösen und
v) auch Kommissionieraufträge zum Kommissionieren von Auftrags-Hängewaren (405a..405i), welche von Auftragswaren (405a..405i) umfasst sind, zu erfassen und
vi) einen Kommissionierauftrag zu bearbeiten, indem das Steuersystem (419) auch dazu eingerichtet ist,
- das Auslagern eines Warenlager-Hängewaren-Ladehilfsmittels (602, 803), welches zumindest eine dem Kommissionierauftrag zugeordnete Auftrags-Hängeware (405a..405i) enthält, aus dem Hängewaren-Warenlager (601) mit Hilfe der Auslager-Fördertechnik (110) auszulösen und
- das Beladen eines Ziel-Ladehilfsmittels (417) mit der zumindest einen Auftrags-Hängeware (405a..405i) an einer Kommissionierstation (106) anzusteuern.

17. Lager- und Kommissioniersystem (100a, 100b) nach Anspruch 15 oder 16, **dadurch gekennzeichnet, dass** die Hängetaschen-Fördertechnik (108a, 108b) und/oder die Einlager-Fördertechnik (109) und/oder die Auslager-Fördertechnik (110) ortsfeste Fördertechnik (404, 407, 409, 410, 414a, 414b) und/oder autonome Flurförderfahrzeuge (418a..418d) umfasst.

## Claims

1. A method for operating a storage and order-picking system (100a, 100b), comprising the steps
a) providing mixed articles (405a..405i, 604a, 604b) at a goods receiving area (101) of the storage and order-picking system (100a, 100b), wherein the articles (405a..405i, 604a, 604b) comprise (a) lying article(s) (405a..405i),
b) loading hanging bags (408..408f) in an article-specific manner with the provided lying article(s) (405a..405i) at a first loading station (102) and acquiring an article type of the lying article(s) (405a..405i) loaded in the hanging bag (408..408f),
c) transporting the loaded hanging bags (408..408f) into a hanging bag sorting device (103) by means of a hanging bag conveyor system (108a, 108b),
d) forming groups of hanging bags (408..408f) in the hanging bag sorting device (103) based on an article-grouping rule, which allocates one or multiple specifiable article types to each group,
e) transporting the groups of hanging bags (408..408f) to a second loading station (104) by means of the hanging bag conveyor system (108a, 108b), **characterized by** the following steps:
f) transferring the lying article(s) (405a..405i) contained in the hanging bags (408..408f) in an article-specific manner of a group of hanging bags (408..408f) into an article storage lying article loading aid (411a, 411b), which is comprised by article storage loading aids (411a, 411b, 602, 803), at the second loading station (104), and storing the article storage lying article loading aid (411a, 411b) in a lying article article storage (105), which is comprised by an article storage (105, 601) of the storage and order-picking system (100a, 100b), by means of a storage conveyor system (109), wherein transferring and storing takes place without reference to a picking order and wherein the article storage lying article loading aid (411a, 411b) is configured differently from a hanging bag (408..408f),
g) acquiring picking orders for picking ordered lying articles, which are comprised by ordered articles (405a..405i),
h) processing a picking order comprising the steps
- retrieving an article storage lying article loading aid (411a, 411b), which contains at least one ordered lying article (405a..405i) allocated to the picking order, from the lying article article storage (105) by means of a retrieval conveyor system (110), and
- loading a target loading aid (417) with the at least one ordered lying article (405a..405i) at a picking station (106).

2. The method according to claim 1, additionally comprising the steps
a') providing mixed articles (405a..405i, 604a, 604b) at the goods receiving area (101) of the storage and order-picking system (100a, 100b), wherein the articles (405a..405i) also comprises mixed hanging articles (604a, 604b),
b') loading hanging bags (408..408f) and/or hanging article transport carriers (1001) with the provided hanging articles (604a, 604b) in an article-specific manner at the first loading station (102), and acquiring an article type of the hanging articles (604a, 604b) loaded in/on the hanging bag (408..408f) and/or on the hanging article transport carrier (1001),
c') transporting the loaded hanging bags (408..408f) and/or the loaded hanging article transport carrier (1001) into the hanging bag sorting device (103) by means of the hanging bag conveyor system (108a, 108b),
d') forming groups of hanging bags (408..408f) and/or hanging article transport carriers (1001) in the hanging bag sorting device (103) based on the article-grouping rule, which allocates one or multiple specifiable article types to each group,
e') transporting the groups of hanging bags (408..408f) and/or the groups of hanging article transport carriers (1001) to the second loading station (104) by means of the hanging bag conveyor system (108a, 108b),
f') transferring the hanging articles (604a, 604b) loaded into/onto the hanging bag (408..408f) and/or on the hanging article transport carriers (1001), of a group of hanging bags (408..408f) and/or hanging article transport carriers (1001) into/onto an article storage hanging article loading aid (602, 803), which is comprised by the article storage loading aids (411a, 411b, 602, 803), at the second loading station (104), and storing the article storage hanging article loading aid (602, 803) in the hanging article article storage (601), which is comprised by the article storage (105, 601) of the storage and order-picking system (100a, 100b), by means of the storage conveyor system (109), wherein transferring and storing takes place without reference to a picking order, and wherein the article storage hanging article loading aid (602, 803) comprises, in particular, a suspension rod,
g') acquiring picking orders for picking ordered hanging articles (604a, 604b), which are comprised by the ordered articles (405a..405i),
h') processing a picking order comprising the steps of
- retrieving an article storage hanging article loading aid (602, 803), which contains at least one ordered hanging article (604a, 604b) allocated to the picking order, from the hanging article article storage (601), by means of the retrieval conveyor system (110), and
- loading a target loading aid (417) with the at least one ordered hanging article (604a, 604b) at a picking station (106).

3. The method according to claim 1 or 2, **characterized in that** steps e) and f) are carried out when the number of hanging bags (408..408f) of a group reaches a hanging bag group size threshold value (SW2) or the number of articles (405a..405i) in the hanging bags (408..408f) of a group reaches an article group size threshold value.

4. The method according to one of claims 1 to 3, **characterized in that** steps e) and f) are carried out when the dwell time of hanging bags (408..408f) or articles (405a..405i) in the hanging bag sorting device (103) reaches a dwell time threshold value (SW1).

5. The method according to one of claims 1 to 4, **characterized in that** exclusively return articles (405a..405i) are loaded in the hanging bags (408..408f) and are treated according to steps b) to h).

6. The method according to one of claims 1 to 5, **characterized in that** step a) also comprises providing (an) article(s) (405a..405i) at the goods receiving area (101) of the storage and order-picking system (100a, 100b), which is provided in an article-specific manner by means of a delivery loading aid (406a..406d), and storing said article(s) (405a..405i) in the article storage (105, 601) is done while bypassing steps b) to f) and without reference to a picking order, wherein
- the mentioned delivery loading aid (406a..406d) is stored directly in the article storage (105, 601), or
- the mentioned article(s) (405a..405i) is/are transferred, at the second loading station (104) or at a third loading station, from the delivery loading aid (406a..406d) into an article storage loading aid (411a, 411b, 602, 803), and the loaded article storage loading aid (411a, 411b, 602, 803) is stored in the article storage (105, 601).

7. The method according to one of claims 1 to 6, **characterized in that** in step b), one single article (405a..405i) is loaded into each hanging bag (408..408f).

8. The method according to one of claims 1 to 7, **characterized in that** exactly one specifiable article type is allocated to the group by the article-grouping rule, and the groups of hanging bags (408..408f) are formed with articles (405a..405i) of the same article type.

9. The method according to one of claims 1 to 7, **characterized in that** multiple specifiable article types are allocated to the hanging bag group by the article-grouping rule, and the groups of hanging bags (408..408f) are formed with articles (405a..405i) of different article types, wherein
- a volume of a first article (405a..405i) of a first article type is at least twice the volume of a second article (405a..405i) of a second article type and/or
- a weight of a first article (405a..405i) of a first article type is at least twice the weight of a second article (405a..405i) of a second article type and/or
- a longest dimension of a first article (405a..405i) of a first article type is at least twice the longest dimension of a second article (405a..405i) of a second article type and/or
- an optical degree of reflection of a first article (405a..405i) of a first article type is at least twice the degree of reflection of a second article (405a..405i) of a second article type and/or
- a color of a first article (405a..405i) of a first article type, is at least 30° removed in a color wheel from a color of a second article (405a..405i) of a second article type.

10. The method according to claim 9, **characterized in that** after step d), the hanging bags (408..408f) of a group are present in blocks sorted with respect to the article type of the articles (405a..405i) contained therein.

11. The method according to claim 9, **characterized in that** after step d), the hanging bags (408..408f) of a group are chaotically distributed with respect to the article type of the articles (405a..405i) contained therein.

12. The method according to one of claims 1 to 11, **characterized in that** in step f), the article storage loading aids (411a, 411b, 602, 803) are loaded with articles (405a..405i) of one article type in an article-specific manner at the second loading station (104).

13. The method according to one of claims 1 to 11, **characterized in that** in step f), the article storage loading aids (411a, 411b, 602, 803) are loaded with articles (405a..405i) of different article types at the second loading station (104), wherein
- a volume of a first article (405a..405i) of a first article type is at least twice the volume of a second article (405a..405i) of a second article type and/or
- a weight of a first article (405a..405i) of a first article type is at least twice the weight of a second article (405a..405i) of a second article type and/or
- a longest dimension of a first article (405a..405i) of a first article type is at least twice the longest dimension of a second article (405a..405i) of a second article type and/or
- an optical degree of reflection of a first article (405a..405i) of a first article type is at least twice the degree of reflection of a second article (405a..405i) of a second article type and/or
- a color of a first article (405a..405i) of a first article type, is at least 30° removed in a color wheel from a color of a second article (405a..405i) of a second article type.

14. The method according to one of claims 1 to 13, **characterized in that** in step g), it is checked whether an ordered article (405a..405i) to be picked is in stock in the hanging bag sorting device (103) and, upon a positive result of the check, instead of step h), for processing a picking order,
- a hanging bag (408..408f), which contains at least an ordered article (405a..405i) allocated to the picking order, is retrieved from the hanging bag sorting device (103) by means of a hanging bag conveyor system (108a, 108b), and
- a target loading aid (417) is loaded at a picking station (106) with the at least one ordered article (405a..405i).

15. A storage and order-picking system (100a, 100b), comprising
- a goods receiving area (101) for providing mixed articles (405a..405i, 604a, 604b), wherein the articles (405a..405i, 604a, 604b) comprise lying articles (405a..405i),
- a lying article storage (105) provided downstream of the goods receiving area (101) in respect of a conveying stream, which is comprised by an article storage (105, 601) of the storage and order-picking system (100a, 100b),
- a picking station (106) provided downstream of the lying article article storage (105) in respect of a conveying stream, which is connected, in respect of a conveying stream, to the lying article article storage (105) via a retrieval conveyor system (110),
- a first loading station (102), which is configured to load hanging bags (408..408f) with the provided lying articles (405a..405i) in an article-specific manner,
- a hanging bag sorting device (103) for the hanging bags (408..408f) provided downstream of the first loading station (102) in respect of a conveying stream, which is connected, in respect of a conveying stream, to the first loading station (102) via a hanging bag conveyor system (108a, 108b),
and
- a control system (419), which is configured to
i) acquire an article type of a lying article (405a..405i) loaded in a hanging bag (408..408f), and
ii) control the hanging bag sorting device (103) for forming groups of hanging bags (408..408f) based on an article-grouping rule, which allocates one or multiple specifiable article types to each group,
**characterized by**
- a second loading station (104), which is provided downstream of the hanging bag sorting device (103) in respect of a conveying stream and upstream of the lying article article storage (105) in respect of a conveying stream, which second loading station (104) is connected, in respect of a conveying stream, to the hanging bag sorting device (103) via the hanging bag conveyor system (108a, 108b), which is connected, in respect of a conveying stream, to the lying article article storage (105) via a storage conveyor system (109), and which is configured to transfer the lying articles (405a..405i) contained in the hanging bags (408..408f) in an article-specific manner from the hanging bags (408..408f) into an article storage lying article loading aid (411a, 411b), wherein the article storage lying article loading aid (411a, 411b) is comprised by article storage loading aids (411a, 411b, 602, 803) and is configured differently from a hanging bag (408..408f), and
- the control system (419), which is also configured to
iii) control the hanging bag conveyor system (108a, 108b) for a transport of the group of hanging bags (408..408f) to a second loading station (104), and
iv) trigger the transfer of the lying articles (405a..405i) contained in the hanging bags (408..408f) from the hanging bags (408..408f) of a group of hanging bags (408..408f) into the article storage lying article loading aid (411a, 411b) and the storing of the article storage lying article loading aids (411a, 411b) into the lying article article storage (105) by means of the storage conveyor system (109) without reference to a picking order, and
v) acquire picking orders for picking ordered lying articles (405a..405i), which are comprised by ordered articles (405a..405i), and
vi) process a picking order by the control system (419) also being configured to
- trigger the retrieval of an article storage lying article loading aid (411a, 411b), which contains at least one ordered lying article (405a..405i) allocated to the picking order, from the lying article article storage (105) by means of the retrieval conveyor system (110), and
- control the loading of a target loading aid (417) with the at least one ordered lying article (405a..405i) at a picking station (106).

16. The storage and order-picking system (100a, 100b) according to claim 15, **characterized in that**
- the goods receiving area (101) is configured to provide mixed articles (405a..405i, 604a, 604b), which also comprise hanging articles (604a, 604b),
- a hanging article article storage (601) provided downstream of the goods receiving area (101) in respect of a conveying stream is provided, which is comprised by the article storage (105, 601) of the storage and order-picking system (100a, 100b),
- the picking station (106) is provided downstream of the hanging article article storage (601) in respect of a conveying stream and connected, in respect of a conveying stream, to the hanging article article storage (601) via a retrieval conveyor system (110),
- the first loading station (102) is configured to load hanging bags (408..408f) and/or hanging article transport carriers (1001) with the provided hanging articles (405a..405i) in an article-specific manner,
- the hanging bag sorting device (103) is also configured to transport hanging article transport carriers (1001),
- the second loading station (104) is provided upstream of the hanging article article storage (601) in respect of a conveying stream and connected, in respect of a conveying stream, to the hanging article article storage (601) via the storage conveyor system (109), and that the second loading station (104) is also configured to transfer the hanging articles (604a, 604b) loaded in the hanging bags (408..408f) and/or on the hanging article transport carriers (1001) in an article-specific manner from the hanging bags (408..408f) and/or the hanging article transport carriers (1001) into/onto an article storage hanging article loading aid (602, 803), wherein the article storage hanging article loading aid (602, 803) is comprised by article storage loading aids (411a, 411b, 602, 803) and in particular comprises a suspension rod, and
- the control system (419) is also configured to
i) acquire an article type of a hanging article (604a, 604b) loaded in/on the hanging bag (408..408f) and/or on the hanging article transport carrier (1001), and
ii) control the hanging bag sorting device (103) for forming groups of hanging bags (408..408f) and/or hanging article transport carriers (1001) based on an article-grouping rule, which allocates one or more specifiable article types to each group, and
iii) control the hanging bag conveyor system (108a, 108b) for a transport of the group of hanging bags (408..408f) and/or hanging article transport carriers (1001) to a second loading station (104), and
iv) trigger the transfer of the hanging articles (604a, 604b) loaded in/on the hanging bags (408..408f) and/or on the hanging article transport carriers (1001) from the hanging bags (408..408f) and/or from the hanging article transport carriers (1001) of a group of hanging bags (408..408f) and/or hanging article transport carriers (1001) into/onto an article storage hanging article loading aid (602, 803) and to trigger the storing of the article storage hanging article loading aid (602, 803) into the hanging article article storage (601) by means of the storage conveyor system (109) without reference to a picking order, and
v) also acquire picking orders for picking ordered hanging articles (405a..405i), which are comprised by ordered articles (405a..405i), and
vi) process a picking order by the control system (419) also being configured to
- trigger the retrieval of an article storage hanging article loading aid (602, 803), which contains at least one ordered hanging article (405a..405i) allocated to the picking order, from the hanging article article storage (601) by means of the retrieval conveyor system (110), and
- control the loading of a target loading aid (417) with the at least one ordered hanging article (405a..405i) at a picking station (106).

17. The storage and order-picking system (100a, 100b) according to claim 15 or 16, **characterized in that** the hanging bag conveyor system (108a, 108b) and/or the storage and order-picking system (109) and/or the retrieval conveyor system (110) comprises a stationary conveying system (404, 407, 409, 410, 414a, 414b) and/or autonomous mobile robots (418a..418d).

## Revendications

1. Procédé de fonctionnement d'un système de stockage et de préparation de commandes (100a, 100b), comprenant les étapes suivantes
a) mise à disposition d'articles divers (405a... 405i, 604a, 604b) au niveau d'une entrée d'articles (101) du système de stockage et de préparation de commandes (100a, 100b), dans lequel l'article (405a... 405i, 604a, 604b) comprend un article posé à plat (405a... 405i),
b) chargement sélectif de poches suspendues (408... 408f) avec l'article posé à plat (405a... 405i) mise à disposition au niveau d'une première station de chargement (102) et détection d'un type d'article de l'article posé à plat (405a... 405i) chargé dans la poche suspendue (408... 408f),
c) transport des poches suspendues (408... 408f) chargées vers un dispositif de tri des poches suspendues (103) à l'aide d'un système de convoyage de poches suspendues (108a, 108b),
d) formation de groupes de poches suspendues (408... 408f) dans le dispositif de tri des poches suspendues (103) sur la base d'une directive de groupage d'articles, qui attribue à un groupe un ou plusieurs types d'articles prédéterminés,
e) transport des groupes de poches suspendues (408... 408f) vers une deuxième station de chargement (104) à l'aide du système de convoyage de poches suspendues (108a, 108b),
**caractérisé par** les étapes suivantes :
f) transfert de l'article posé à plat (405a... 405i) d'un groupe, contenu de manière sélective dans les poches suspendues (408... 408f), des poches suspendues (408... 408f) vers un équipement de chargement d'articles posés à plat du magasin d'articles (411a, 411b), qui fait partie des équipements de chargement du magasin d'articles (411a, 411b, 602, 803), au niveau de la deuxième station de chargement (104) et stockage de l'équipement de chargement d'article posé à plat du magasin d'articles (411a, 411b) dans un magasin d'articles posés à plat (105), qui est intégré dans un magasin d'articles (105, 601) du système de stockage et de préparation de commandes (100a, 100b), à l'aide d'un système de convoyage de stockage (109), dans lequel le transfert et le stockage a lieu sans référence à une instruction de préparation de commande et dans lequel l'équipement de chargement d'articles posés à plat du magasin d'articles (411a, 411b) est conçu différemment d'une poche suspendue (408... 408f),
g) saisie d'instructions de préparation de commandes pour la préparation de commandes d'articles posés à plat, qui sont inclus dans des articles commandés (405a... 405i),
h) traitement d'une instruction de préparation de commande comprenant les étapes suivantes
- déstockage d'un équipement de chargement d'article posé à plat du magasin d'articles (411a, 411b), qui contient au moins un article posé à plat commandé (405a... 405i) correspondant à l'instruction de préparation de commande, hors du magasin d'articles posés à plat (105) à l'aide d'un système de convoyage de déstockage (110) et
- chargement d'un équipement de chargement cible (417) avec l'au moins un article posé à plat commandé (405a... 405i) au niveau d'une station de préparation de commandes (106).

2. Procédé selon la revendication 1, comprenant en outre les étapes suivantes
a') mise à disposition d'articles divers (405a... 405i, 604a, 604b) au niveau de l'entrée d'articles (101) du système de stockage et de préparation de commandes (100a, 100b), dans lequel l'article (405a... 405i) comprend également des articles suspendus divers (604a, 604b),
b') chargement sélectif de poches suspendues (408... 408f) et/ou de supports de transport d'articles suspendus (1001) avec l'article suspendu (604a, 604b) mis à disposition au niveau de la première station de chargement (102) et détection d'un type d'article de l'article suspendu (604a, 604b) chargé dans/sur la poche suspendue (408... 408f) et/ou sur le support de transport d'article suspendu (1001),
c') transport des poches suspendues (408... 408f) chargées et/ou des supports de transport d'articles suspendus (1001) chargés vers le dispositif de tri de poches suspendues (103) à l'aide du système de convoyage de poches suspendues (108a, 108b),
d') formation de groupes de poches suspendues (408... 408f) et/ou de supports de transport d'articles suspendus (1001) dans le dispositif de tri de poches suspendues (103) sur la base de la directive de groupage des articles, qui attribue à un groupe un ou plusieurs types d'articles prédéterminés,
e') transport des groupes de poches suspendues (408... 408f) et/ou des groupes de supports de transport d'articles suspendus (1001) vers la deuxième station de chargement (104) à l'aide du système de convoyage de poches suspendues (108a, 108b),
f') transfert de l'article suspendu (604a, 604b), chargé dans/sur la poche suspendue (408... 408f) et/ou sur le support de transport d'article suspendu (1001), d'un groupe de poches suspendues (408... 408f) et/ou de supports de transport d'articles suspendus (1001) dans/vers un équipement de chargement d'articles suspendus du magasin d'articles (602, 803), qui fait partie des équipements de chargement du magasin d'articles (411a, 411b, 602, 803), au niveau de la deuxième station de chargement (104) et stockage de l'équipement de chargement d'articles suspendus du magasin d'articles (602, 803) dans le magasin d'articles suspendus (601), qui fait partie du magasin d'articles (105, 601) du système de stockage et de préparation de commandes (100a, 100b), à l'aide du système de convoyage de stockage (109), dans lequel le transfert et le stockage ont lieu sans référence à une instruction de préparation de commande et dans lequel l'équipement de chargement d'articles suspendus du magasin d'articles (602, 803) comprend plus particulièrement une tige de suspension,
g') saisie d'instructions de préparation de commandes pour la préparation d'articles suspendus commandés (604a, 604b), qui font partie des articles commandés (405a... 405i),
h') traitement d'une instruction de préparation de commande comprenant les étapes suivantes
- déstockage d'un équipement de chargement d'articles suspendus du magasin d'articles (602, 803), qui contient au moins un article suspendu commandé (604a, 604b) correspondant à l'instruction de préparation de commande, hors du magasin d'articles suspendus (601) à l'aide d'un système de convoyage de déstockage (110) et
- chargement d'un équipement de chargement cible (417) avec l'au moins un article suspendu commandé (604a, 604b) au niveau d'une station de préparation de commandes (106).

3. Procédé selon la revendication 1 ou 2, **caractérisé en ce que** les étapes e) et f) sont exécutées lorsque le nombre de poches suspendues (408... 408f) d'un groupe atteint une valeur seuil de taille de groupe d'articles suspendus (SW2) ou lorsque le nombre d'articles (405a... 405i) dans les poches suspendues (408... 408f) d'un groupe atteint une valeur seuil de taille de groupe d'articles.

4. Procédé selon l'une des revendications 1 à 3, **caractérisé en ce que** les étapes e) et f) sont exécutées lorsque le temps de séjour des poches suspendues (408... 408f) ou des articles (405a... 405i) dans le dispositif de tri des poches suspendues (103) atteint une valeur seuil de temps de séjour (SW1).

5. Procédé selon l'une des revendications 1 à 4, **caractérisé en ce que** seules les articles retournés (405a... 405i) sont chargées dans les poches suspendues (408... 408f) et traitées selon les étapes b) à h).

6. Procédé selon l'une des revendications 1 à 5, **caractérisé en ce que** l'étape a) comprend également la mise à disposition d'un article (405a... 405i) au niveau de l'entrée d'articles (101) du système de stockage et de préparation de commandes (100a, 100b), qui est mis à disposition sélectivement à l'aide d'un équipement de chargement de livraison (406a... 406d) et un stockage de cet article (405a... 405i) dans le magasin d'articles (105, 601) a lieu en contournant les étapes b) à f) et sans référence à une instruction de préparation de commandes, dans lequel
- l'équipement de chargement de livraison (406a... 406d) mentionné est stocké directement dans le magasin d'articles (105, 601) ou
- l'article (405a... 405i) mentionné est transféré, au niveau de la deuxième station de chargement (104) ou au niveau d'une troisième station de chargement, de l'équipement de chargement de livraison (406a... 406d) vers un équipement de chargement de magasin d'articles (411a, 411b, 602, 803) et l'équipement de chargement de magasin d'articles (411a, 411b, 602, 803) chargé est stocké dans le magasin d'articles (105, 601).

7. Procédé selon l'une des revendications 1 à 6, **caractérisé en ce que**, à l'étape b), dans chaque poche suspendue (408... 408f), un seul article (405a... 405i).

8. Procédé selon l'une des revendications 1 à 7, **caractérisé en ce que**, grâce à la directive de groupage d'articles, exactement un type d'article prédéterminé est attribué au groupe et les groupes de poches suspendues (408... 408f) sont formés d'articles (405a... 405i) du même type d'article.

9. Procédé selon l'une des revendications 1 à 7, **caractérisé en ce que**, grâce à la directive de groupage d'articles, plusieurs types d'articles prédéterminés sont attribués au groupe et les groupes de poches suspendues (408... 408f) sont formés d'articles (405a... 405i) de différents types, dans lequel
- un volume d'un premier article (405a... 405i) d'un premier type d'article est au moins deux fois plus grand qu'un volume d'un deuxième article (405a... 405i) d'un deuxième type d'article et/ou
- un poids d'un premier article (405a... 405i) d'un premier type d'article est au moins deux fois plus grand qu'un poids d'un deuxième article (405a... 405i) d'un deuxième type d'article et/ou
- la dimension la plus longue d'un premier article (405a... 405i) d'un premier type d'article est au moins deux fois plus grande que la dimension la plus longue d'un deuxième article (405a... 405i) d'un deuxième type d'article et/ou
- un degré de réflexion optique d'un premier article (405a... 405i) d'un premier type d'article est deux fois plus grand qu'un degré de réflexion optique d'un deuxième article (405a... 405i) d'un deuxième type d'article et/ou
- une couleur d'un premier article (405a... 405i) d'un premier type d'article dans un cercle chromatique présente une distance d'au moins 30° par rapport à une couleur d'un deuxième article (405a... 405i) d'un deuxième type d'article.

10. Procédé selon la revendication 9, **caractérisé en ce que** les poches suspendues (408... 408f) d'un groupe selon l'étape d) sont triés à l'intérieur du groupe en blocs en fonction du type d'article des articles (405a... 405i) contenues dans celles-ci.

11. Procédé selon la revendication 9, **caractérisé en ce que** les poches suspendues (408... 408f) d'un groupe selon l'étape d) sont répartis de manière aléatoire à l'intérieur du groupe en fonction du type d'article des articles (405a... 405i) contenues dans celles-ci.

12. Procédé selon l'une des revendications 1 à 11, **caractérisé en ce que** les équipements de chargement du magasin d'articles (411a, 411b, 602, 803) sont chargés à l'étape f) au niveau de la deuxième station de chargement (104) de manière sélective avec des articles (405a... 405i).

13. Procédé selon l'une des revendications 1 à 11, **caractérisé en ce que** les équipements de chargement du magasin d'articles (411a, 411b, 602, 803) sont chargés à l'étape f) au niveau de la deuxième station de chargement (104) avec des articles (405a... 405i) de types d'articles différents, dans lequel
- un volume d'un premier article (405a... 405i) d'un premier type d'article est au moins deux fois plus grand qu'un volume d'un deuxième article (405a... 405i) d'un deuxième type d'article et/ou
- un poids d'un premier article (405a... 405i) d'un premier type d'article est au moins deux fois plus grand qu'un poids d'un deuxième article (405a... 405i) d'un deuxième type d'article et/ou
- la dimension la plus longue d'un premier article (405a... 405i) d'un premier type d'article est au moins deux fois plus grande que la dimension la plus longue d'un deuxième article (405a... 405i) d'un deuxième type d'article et/ou
- un degré de réflexion optique d'un premier article (405a... 405i) d'un premier type d'article est deux fois plus grand qu'un degré de réflexion optique d'un deuxième article (405a... 405i) d'un deuxième type d'article et/ou
- une couleur d'un premier article (405a... 405i) d'un premier type d'article dans un cercle chromatique présente une distance d'au moins 30° par rapport à une couleur d'un deuxième article (405a... 405i) d'un deuxième type d'article.

14. Procédé selon l'une des revendications 1 à 13, **caractérisé en ce que**, à l'étape g), il est vérifié si un article commandé à préparer (405a... 405i) est en réserve dans le dispositif de tri de poches suspendues (103) et, dans le cas d'un résultat positif de la vérification, au lieu de l'étape h), pour le traitement d'une instruction de préparation de commande
- une poche suspendue (408... 408f), qui contient au moins un article commandé (405a... 405i) correspond à l'instruction de préparation de commande, est déstockée à l'aide d'un système de convoyage de poches suspendues (108a, 108b) hors du dispositif de tri des poches suspendues (103) et
- un équipement de chargement cible (417) est chargé au niveau d'une station de préparation de commande (106) avec l'au moins un article commandé (405a... 405i).

15. Système de stockage et de préparation de commandes (100a, 100b) comprenant
- une entrée d'articles (101) pour la mise à disposition d'articles divers (405a... 405i, 604a, 604b), dans lequel l'article (405a... 405i, 604a, 604b) comprend un article posé à plat (405a... 405i),
- un magasin d'articles posés à plat (105) disposé en aval, dans le sens du convoyage, de l'entrée d'articles (101), qui fait partie d'un magasin d'articles (105, 601) du système de stockage et de préparation de commandes (100a, 100b),
- une station de préparation de commandes (106) disposée en aval, dans le sens du convoyage, du magasin d'articles posés à plat (105), qui est reliée, par l'intermédiaire d'un système de convoyage de déstockage (110), avec le magasin d'articles posés à plat (105),
- une première station de chargement (102), qui est conçue pour le chargement sélectif de poches suspendues (408... 408f) avec l'article posé à plat (405a... 405i) mis à disposition,
- un dispositif de tri de poches suspendues (103) pour les poches suspendues (408...408f), disposé en aval, dans le sens du convoyage, de la première station de chargement (102), qui est reliée, par l'intermédiaire d'un système de convoyage de poches suspendues (108a, 108b), avec la première station de chargement (102) et
- un système de commande (419) qui est conçu
i) pour détecter un type d'article d'un article posé à plat (405a... 405i) chargé dans une poche suspendue (408... 408f) et
ii) pour contrôler le dispositif de tri de poches suspendues (103) pour la formation de groupes de poches suspendues (408... 408f) sur la base d'une directive de groupage d'articles, qui attribue un ou plusieurs types d'articles prédéterminés à un groupe, **caractérisé par**
- une deuxième station de chargement (104) qui est disposée en aval, dans le sens du convoyage, du dispositif de tri de poches suspendues (103) et est disposée en amont, dans le sens du convoyage, du magasin d'articles posés à plat (105), qui est reliée, par l'intermédiaire du système de convoyage de poches suspendues (108a, 108b), avec le dispositif de tri de poches suspendues (103), qui est reliée, par l'intermédiaire d'un système de convoyage de stockage (109) avec le magasin d'articles posés à plat (105) et qui est conçue pour le transfert des articles posés à plat (405a... 405i), contenus sélectivement dans les poches suspendues (408... 408f), des poches suspendues (408... 408f) vers un équipement de chargement d'articles posés à plat du magasin d'articles (411a, 411b), dans lequel l'équipement de chargement d'articles posés à plat du magasin d'articles (411a, 411b) fait partie des équipements de chargement du magasin d'articles (411a, 411b, 602, 803) et qui est conçu différemment d'une poche suspendue (408... 408f) et
- le système de commande (419), qui est conçu
iii) pour contrôler le système de convoyage de poches suspendues (108a, 108b) pour un transport des groupes de poches suspendues (408... 408f) vers une deuxième station de chargement (104) et
iv) pour déclencher le transfert des articles posés à plats (405a... 405i), contenus dans les poches suspendues (408... 408f), des poches suspendues (408... 408f) vers l'équipement de chargement d'articles posés à plat du magasin d'articles (411a, 411b), et le stockage des équipements de chargement d'articles posés à plat du magasin d'articles (411a, 411b) dans le magasin d'articles posés à plat (105) à l'aide du système de convoyage de stockage (109) sans référence à une instruction de préparation de commande et
v) pour détecter des instructions de préparation de commande pour la préparation d'articles posés à plat commandés (405a... 405i), qui font partie d'articles commandés (405a... 405i) et
vi) pour traiter une instruction de préparation de commandes, grâce au fait que le système de commande (419) est également conçu
- pour déclencher le déstockage d'un équipement de chargement d'articles posés à plat du magasin d'articles (411a, 411b), qui contient au moins un article posé à plat commandé (405a... 405i) correspondant à l'instruction de préparation de commande, hors du magasin d'articles posés à plat (105) à l'aide du système de convoyage de déstockage (110) et
- pour contrôler le chargement d'un équipement de chargement cible (417) avec l'au moins un article posé à plat commandé (405a... 405i) au niveau d'une station de préparation de commandes (106).

16. Système de stockage et de préparation de commandes (100a, 100b) selon la revendication 15, **caractérisé en ce que**
- l'entrée des articles (101) est conçue pour la mise à disposition d'articles divers (405a... 405i, 604a, 604b) qui comprennent également des articles suspendus (604a, 604b),
- un magasin d'articles suspendus (601), disposé en aval, dans le sens du convoyage, de l'entrée d'articles (101), qui fait partie du magasin d'articles (105, 601) du système de stockage et de préparation de commandes (100a, 100b),
- la station de préparation de commandes (106) est disposée en aval, dans le sens du convoyage, du magasin d'articles suspendus (601) et est reliée, par l'intermédiaire d'un système de convoyage de déstockage (110), avec le magasin d'articles suspendus (601),
- la première station de chargement (102) est conçue pour le chargement sélectif de poches suspendues (408... 408f) et/ou de supports de transport d'articles suspendus (1001) avec les articles suspendus (405a... 405i) mis à disposition,
- le dispositif de tri des poches suspendus (103) est également conçu pour le transport de supports de transport d'articles suspendus (1001),
- la deuxième station de chargement (104) est disposée en amont, dans le sens du convoyage, du magasin d'articles suspendus (601) et est reliée, par l'intermédiaire du système de convoyage de stockage (109), avec le magasin d'articles suspendus (601) et **en ce que** la deuxième station de chargement (104) est également conçue pour le transfert des articles suspendus (604a, 604b), chargés de manière sélective dans les poches suspendues (408... 408f) et/ou sur les supports de transport d'articles suspendus (1001), des poches suspendues (408... 408f) et/ou des supports de transport d'articles suspendus (1001) vers un équipement de chargement d'articles suspendus du magasin d'articles (602, 803), dans lequel l'équipement de chargement d'articles suspendus du magasin d'articles (602, 803) fait partie des équipements de chargement du magasin d'articles (411a, 411b, 602, 803) et comprend plus particulièrement une poche suspendue et
- le système de commande (419) est également conçu
i) pour détecter un type d'article d'un article suspendu (604a, 604b) chargé dans/sur la poche suspendue (408... 408f) et/ou sur le support de transport d'articles suspendus (1001) et
ii) pour contrôler le dispositif de tri de poches suspendues (103) pour la formation de groupes de poches suspendues (408... 408f) et/ou de supports de transport d'articles suspendus (1001) sur la base d'une directive de groupage d'articles, qui attribue un ou plusieurs types d'articles à chaque groupe et
iii) pour contrôler le système de convoyage de poches suspendues (108a, 108b) pour un transport des groupes de poches suspendues (408... 408f) et/ou de supports de transport d'articles suspendus (1001) vers une deuxième station de chargement (104) et
iv) pour déclencher le transfert de l'article suspendu (604a, 604b) chargé dans/sur les poches suspendues (408... 408f) et/ou sur les supports de transport d'articles suspendus (1001), des poches suspendues (408... 408f) et/ou des supports de transport d'articles suspendus (1001) vers un équipement de chargement d'articles suspendus du magasin d'articles (602, 803) et pour déclencher le stockage de l'équipement de chargement d'articles suspendus du magasin d'articles (602, 803) dans le magasin d'articles suspendus (601) à l'aide du système de convoyage de stockage (109) sans référence à une instruction de préparation de commande et
v) pour détecter également des instructions de préparation de commande pour la préparation d'articles suspendus commandés (405a... 405i), qui font partie des articles commandés (405a... 405i) et
vi) pour traiter une instruction de préparation, grâce au fait que le système de commande (419) est également conçu
- déclencher le déstockage d'un équipement de chargement d'articles suspendus du magasin d'articles (602, 803), qui contient au moins un article suspendu commandé (405a... 405i) correspondant à l'instruction de préparation de commande, hors du magasin d'articles suspendus (601) à l'aide du système de convoyage de déstockage (110) et
- pour contrôler le chargement d'un équipement de chargement cible (417) avec l'au moins un article suspendu commandé (405a... 405i) au niveau d'une station de préparation de commandes (106).

17. Système de stockage et de préparation de commandes (100a, 100b) selon la revendication 15 ou 16, **caractérisé en ce que** le système de convoyage de poches suspendues (108a, 108b) et/ou le système de convoyage de stockage (109) et/ou le système de convoyage de déstockage (110) comprend un système de convoyage stationnaire (404, 407, 409, 410, 414a, 414b) et/ou des chariots élévateurs autonomes (418a... 418b).
